# EUROPEAN PATENT SPECIFICATION

(11) **EP 1 913 097 B1**
(45) Date of publication and mention of the grant of the patent: **05.08.2009**
(21) Application number: 06785292.1
(22) Date of filing: 21.06.2006
(51) Int. Cl.: C09D 5/02, C09D 5/44, C09D 133/08

(54) **ELECTRODEPOSITABLE AQUEOUS RESINOUS DISPERSIONS AND METHODS FOR THEIR PREPARATION**
NACH DEM ELEKTROTAUCHVERFAHREN AUFTRAGBARE WÄSSRIGE HARZDISPERSION UND VERFAHREN ZU IHRER HERSTELLUNG
DISPERSIONS RESINEUSES AQUEUSES ELECTRODEPOSABLES ET LEURS PROCEDES DE PREPARATION

(30) Priority: 13.07.2005 US 180323
(43) Date of publication of application: 23.04.2008
(73) Proprietor: PPG Industries Ohio, Inc., Cleveland, OH 44111 (US)
(72) Inventor: FENN, David R., Allison Park, Pennsylvania 15101 (US)
(74) Representative: Fleischer, Holm Herbert
(86) International application number: PCT/US2006/024205
(87) International publication number: WO 2007/008359

(56) References cited:
- EP-A- 1 541 647
- EP-A2- 0 752 496

## Description

### FIELD OF THE INVENTION

The present invention relates to electrodepositable aqueous resinous dispersions as well as to methods for their preparation. The dispersions comprise a polymeric dispersant comprising an at least partially neutralized high molecular weight cationic acrylic polymer and an acrylic polymer that is different from polymeric dispersant.

### BACKGROUND OF THE INVENTION

Electrodepositable aqueous dispersions of acrylic polymers are sometimes used in water-based electrodepositable coating compositions. In some cases, these dispersions are prepared by polymerizing acrylic monomers under free radical polymerization techniques in an aqueous medium in the presence of a surfactant. Surfactants are often utilized to stabilize the dispersion and often consist of relatively low molecular weight ionic or non-ionic materials that contain both hydrophilic and hydrophobic groups. The presence of a surfactant, however, can present a problem in subsequent coating applications by remaining in the coating film where they can adversely affect properties of the coating, such as adhesion and humidity resistance.

As a result, it would be desirable to provide aqueous dispersions of acrylic polymers, suitable for use in electrodepositable compositions, wherein the dispersion can be stable even without the inclusion of a surfactant.

### SUMMARY OF THE INVENTION

In certain respects, the present invention is directed to electrodepositable aqueous resinous dispersions comprising: (a) a polymeric dispersant comprising an at least partially neutralized high molecular weight cationic acrylic polymer having a Z-average molecular weight of 200,000 to 2,000,000, and (b) a cationic acrylic polymer that is different from the polymeric dispersant.

In other respects, the present invention is directed to electrodepositable compositions comprising a dispersion of the present invention, electroconductive substrates at least partially coated with such compositions, and methods for coating an electroconductive substrate with such compositions.

The present invention is also directed to methods for making electrodepositable aqueous resinous dispersions. These methods comprise: (a) dispersing an ethylenically unsaturated polymerizable monomer composition and a free radical initiator in an aqueous medium in the presence of an at least partially neutralized high molecular weight cationic acrylic polymer dispersant having a Z-average molecular weight of 200,000 to 2,000,000, and (b) subjecting the dispersion to emulsion polymerization conditions.

### DETAILED DESCRIPTION OF EMBODIMENTS OF THE INVENTION

For purposes of the following detailed description, it is to be understood that the invention may assume various alternative variations and step sequences, except where expressly specified to the contrary. It is also to be understood that the specific devices, if any, described in the following specification are simply exemplary embodiments of the invention. Hence, any specific dimensions or other physical characteristics related to the embodiments disclosed herein are not to be considered as limiting. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

It should also be understood that, in this application, use of the singular includes the plural unless specifically stated otherwise.

In certain embodiments, the present invention is directed to electrodepositable aqueous resinous dispersions. As used herein, the term "electrodepositable aqueous resinous dispersion" refers to an aqueous dispersion that is suitable for use in an electrodepositable coating composition, that is, a coating composition that is capable of being deposited onto a conductive substrate under the influence of an applied electrical potential. As used herein, the term "dispersion" refers to a two-phase transparent, translucent or opaque resinous system in which a polymer is in the dispersed phase and the dispersing medium, which includes water, is in the continuous phase. In certain embodiments, the dispersions of the present invention are stable dispersions. As used herein, the term "stable dispersion" refers to a dispersion that does not gel, flocculate nor precipitate at a temperature of 25°C for at least 60 days, or, if some precipitation does occur, the precipitate can be redispersed upon agitation.

Certain embodiments of the present invention are stable dispersions that need no externally added dispersing agent to maintain their stability, though such agents may be added is desired. Therefore, certain embodiments of the present invention are directed to dispersions that are substantially free, or, in some cases, completely free, of such surfactants. As used herein, the term "substantially free" means that the material is present in the composition, if at all, as an incidental impurity. In other words, the material does not substantially effect the properties of the composition.

As indicated, certain embodiments of the present invention are directed to electrodepositable aqueous dispersions comprising a polymeric dispersant comprising an at least partially neutralized high molecular weight cationic acrylic polymer. The polymeric dispersant utilized in the aqueous dispersions of the present invention are dispersible, i.e., adapted to be solubilized, dispersed or emulsified in water. As used herein, the term "polymer" refers to oligomers and both homopolymers and copolymers. As used herein, the term "cationic polymer" refers to polymers that comprise cationic functional groups that impart a positive charge. Functional groups that can render a cationic polymer dispersible in water, which are suitable for use in the present invention, include sulfonium groups and amine groups.

In certain embodiments, the polymeric dispersant comprises a cationic polymer that comprises active hydrogen functional groups. As used herein, the term "active hydrogen functional groups" refers to those groups that are reactive with isocyanates as determined by the Zerewitnoff test as is described in the JOURNAL OF THE AMERICAN CHEMICAL SOCIETY, Vol. 49, page 3181 (1927). In certain embodiments, the active hydrogen functional groups are derived from hydroxyl groups, primary amine groups and/or secondary amine groups.

In certain embodiments, the cationic acrylic polymer dispersant is prepared by traditional free radical initiated polymerization techniques, such as solution polymerization techniques, wherein an ethylenically unsaturated polymerizable monomer composition containing, for example, one or more vinyl monomers is subjected to free radical initiated addition polymerization conditions, for example, by heating in the presence of a free radical initiator. In certain embodiments; the cationic acrylic polymer dispersant is prepared from an ethylenically unsaturated polymerizable monomer composition that is substantially free or, in some case, completely free, of diene monomers.

The polymeric dispersant can be prepared in organic solution by techniques well known in the art. For example, the polymeric dispersant can be prepared by conventional free radical initiated solution polymerization techniques in which the polymerizable monomers are dissolved in a solvent or mixture of solvents and polymerized in the presence of a free radical initiator. Examples of suitable solvents which can be used for organic solution polymerization include alcohols, such as ethanol, tertiary butanol, and tertiary amyl alcohol; ketones, such as acetone, methyl ethyl ketone; and ethers, such as dimethyl ether of ethylene glycol. Examples of suitable free radical initiators include those which are soluble in the mixture of monomers, such as azobisisobutyronitrile, azobis-(alpha, gamma-dimethylvaleronitrile), tertiary-butyl perbenzoate, tertiary-butyl peracetate, benzoyl peroxide, and ditertiary-butyl peroxide.

In certain embodiments, to prepare the polymeric dispersant, the solvent is first heated to reflux and the mixture of polymerizable monomers containing a free radical initiator is added slowly to the refluxing solvent. The reaction mixture is held at polymerizing temperatures so as to reduce the free monomer content to below 1.0 percent, such as below 0.5 percent. Suitable specific conditions for forming such polymers include those set forth in the Examples.

Examples of suitable vinyl monomers that may be used in the aforementioned ethylenically unsaturated polymerizable monomer composition include, without limitation, monoolefinic and diolefinic hydrocarbons, such as C₁-C₁₈ alkyl (meth)acrylates. Specific examples include, without limitation, methyl (meth)acrylate, ethyl (meth)acrylate, butyl (meth)acrylate, hexyl (meth)acrylate, octyl (meth)acrylate, isodecyl (meth)acrylate, stearyl (meth)acrylate, 2-ethylhexyl (meth)acrylate, isobornyl (meth)acrylate and t-butyl (meth)acrylate. In certain embodiments, the C₁-C₁₈ alkyl acrylate and methacrylates are used in an amount of up to 90 percent by weight, such as 10 up to 50 percent by weight, based on total weight of the ethylenically unsaturated polymerizable monomer composition.

Besides the alkyl esters of acrylic and methacrylic acid mentioned above, substituted alkyl esters, for example, hydroxyalkyl esters, such as hydroxyethyl, hydroxypropyl, and/or hydroxybutyl (meth)acrylate can also be used. In certain embodiments, such monomers are used in amounts of up to 40 percent by eight, such as 5 to 25 percent by weight, based on total weight of the ethylenically unsaturated polymerizable monomer composition.

Non-limiting examples of other vinyl monomers suitable for use as part of the aforementioned ethylenically unsaturated polymerizable monomer compositions are esters of organic acids, such as vinyl acetate and isopropenyl acetate; allyl compounds such as allyl chloride and allyl cyanide; halogenated monomers, such as vinyl chloride, vinylidene chloride and vinylidene fluoride; amides of acrylic acid and methacrylic acid, such as acrylamide and methacrylamide and the N-alkoxymethyl derivatives thereof, such as N-ethoxymethyl and N-butoxymethyl acrylamide and methacrylamide. Also, vinyl aromatic compounds such as styrene, alpha-methyl styrene, alpha-chloromethyl styrene and vinyl toluene may be used, as well as organic nitriles, such as acrylonitrile and methacrylonitrile. Mixtures of such vinyl monomers may also be used. In certain embodiments, these vinyl monomers are used in amounts of up to 70 percent by weight, such as 10 to 50 percent by weight, based on total weight of ethylenically unsaturated polymerizable monomer composition.

Active hydrogen functional groups can be incorporated into the acrylic polymer by using functional monomers, such as hydroxyalkyl acrylates and methacrylate (as mentioned earlier) or aminoalkyl acrylates and methacrylates. Epoxide functional groups (for conversion to cationic salt groups via reaction with an amine) may be incorporated into the acrylic polymer by using functional monomers, such as glycidyl acrylate and methacrylate, 3,4-epoxycyclohexylmethyl(meth)acrylate, 2-(3,4-epoxycyclohexyl)ethyl(meth)acrylate, or allyl glycidyl ether. Alternatively, epoxide functional groups may be incorporated into the acrylic polymer by reacting carboxyl groups on the acrylic polymer with an epihalohydrin or dihalohydrin, such as epichlorohydrin or dichlorohydrin.

In certain embodiments, the cationic polymer dispersant has a sufficient cationic salt group content to stabilize a subsequent polymerization of an ethylenically unsaturated polymerizable monomer composition (described below) and to provide for a stable electrodepositable coating composition. Also, in certain embodiments, the cationic polymer has sufficient cationic salt group content so that, when used with any other film-forming resins in the electrodepositable coating composition, the composition upon being subjected to electrodeposition conditions will deposit as a coating on the substrate. In certain embodiments, the polymeric dispersant will contain from 0.1 to 5.0, such as 0.3 to 1.1 milliequivalents of cationic salt groups per gram of polymer solids.

In certain embodiments, a chain transfer agent can be used in the synthesis of the polymeric dispersant, such as those that are soluble in the mixture of monomers. Suitable non-limiting examples of such agents include alkyl mercaptans, for example, tertiary-dodecyl mercaptan; ketones, such as methyl ethyl ketone; and chlorohydrocarbons, such as chloroform.

As indicated, the polymeric dispersant comprises a high molecular weight acrylic polymer. As used herein, the term "high molecular weight" refers to resins that have a Z-average molecular weight (Mz), as obtained by gel permeation chromatography carried out in dimethylformamide (DMF) using polystyrene standards in an art-recognized manner, that is at least 200,000, or, in some cases, the Mz is from 200,000 to 2,000,000, such as from 450,000 to 2,000,000. Without being bound by any theory, it is believed that the relatively high molecular weight of the polymeric dispersant allows for the formation of dispersions comprising relatively small particle size polymeric particles, as described in more detail below.

In certain embodiments, the polymeric dispersant (and/or any other polymers that might be present), is, prior to or during dispersion in the dispersing medium, at least partially neutralized, for example, by treating with an acid to form a water-dispersible high molecular weight acrylic polymer. Non-limiting examples of suitable acids are inorganic acids, such as phosphoric acid and sulfamic acid, as well as organic acids, such as, acetic acid and lactic acid, among others. Besides acids, salts such as dimethylhydroxyethylammonium dihydrogenphosphate and ammonium dihydrogenphosphate can be used. In certain embodiments, the polymeric dispersant is neutralized to the extent of at least 30 percent or, in some cases, at least 50 percent, of the total theoretical neutralization equivalent. The step of dispersion may be accomplished by combining the neutralized or partially neutralized polymeric dispersant with the water of the dispersing phase. Neutralization and dispersion can be accomplished in one step by combining the polymeric dispersant and the water. The polymeric dispersant (or its salt) can be added to the dispersing phase medium or the dispersing phase can added to the polymeric dispersant (or its salt). In certain embodiments, the pH of the dispersion is within the range of 5 to 9.

In certain embodiments, the electrodepositable aqueous resinous dispersions of the present invention also comprise a cationic acrylic polymer that is different from the polymeric dispersant described earlier. In certain embodiments, such an acrylic polymer is obtained by (a) dispersing an ethylenically unsaturated polymerizable monomer composition and a free radical initiator in an aqueous medium in the presence of the at least partially neutralized high molecular weight cationic acrylic polymer dispersant described earlier, and (b) subjecting the dispersion to emulsion polymerization conditions to form an aqueous acrylic polymer dispersion.

In certain embodiments, the cationic acrylic polymer that is different from the polymeric dispersant described earlier comprises an active hydrogen-containing acrylic polymer.

In certain embodiments, to prepare the acrylic polymer that is different from the polymeric dispersant, an ethylenically unsaturated polymerizable monomer composition containing, for example, one or more vinyl monomers, is dispersed in the dispersing medium in the presence of the previously described polymeric dispersant and subjected to free radical initiated addition polymerization conditions, for example, by heating in the presence of a free radical initiator. In certain embodiments, the acrylic polymer that is different from the previously described polymeric dispersant is prepared from an ethylenically unsaturated polymerizable monomer composition that is substantially free or, in some case, completely free, of diene monomers.

Examples of suitable vinyl monomers that may be used in the ethylenically unsaturated polymerizable monomer composition used to prepare the acrylic polymer that is different from the polymeric dispersant include, without limitation, the monoolefinic and diolefinic hydrocarbons, esters of organic acids, allyl compounds, halogenated monomers, amides of acrylic acid and methacrylic acid, vinyl aromatic compounds, and organic nitriles described earlier.

Active hydrogen functional groups, such as hydroxyl, primary amine groups and/or secondary amine groups, and/or sulfonium groups, can be incorporated into the acrylic polymer by using the monomers described earlier with respect to the polymeric dispersant.

Other suitable monomers can be those which are reactive with the high molecular weight ionic acrylic polymer dispersant, and cause grafting between that polymer and the polymerizing ethylenically unsaturated monomers. Non-limiting examples of such monomers include glycidyl acrylate and methacrylate. In certain embodiments, the grafting monomers are used in amounts of up to 20 percent by weight based on total weight of the ethylenically unsaturated polymerizable monomer composition.

As previously indicated, in certain embodiments of the present invention, the acrylic polymer that is different from the polymeric dispersant is prepared via polymerization of an ethylenically unsaturated polymerizable monomer composition in a dispersing phase comprising water and the previously described polymeric dispersant. In certain embodiments, the monomer composition is dispersed in the water in the presence of the polymeric dispersant and subjected to addition polymerization conditions by heating in the presence of a free radical initiator. The time and temperature of polymerization will depend on one another, the ingredients selected and, in some cases, the scale of the reaction. In certain embodiments, the polymerization is conducted at 40°C to 100°C for 2 to 20 hours.

The free radical initiator utilized for the polymerization may be selected from any of those used for aqueous latex polymerization techniques, including redox pair initiators, peroxides, hydroperoxides, peroxydicarbonates, azo compounds and the like. Suitable azo initiators include, for example, cationic salt group containing azo initiators, such as 2,2'-azobis(2-amidino-propane) dihydrochloride, 2,2'-azobis(N,N'-dimethyleneisobutyramidine) dihydrochloride, the acid salts, such as lactate, acetate or mixed salts of 2,2'-azobis(2-amidino-propane), 2,2'-azobis(N,N'-dimethyleneisobutyramidine). Other suitable cationic free radical initiators include 2,2'-azobis(2-methyl-N-phenylpropionamidine) dihydrochloride, 2,2'-azobis[N-(4-chlorophenyl)-2-methylpropionamidine] dihydrochloride, 2,2'-azobis[N-(4-hydroxyphenyl)-2-methylpropionamidine] dihydrochloride, 2,2'-azobis[2-methyl-N-(phenylmethyl)propionamidine] dihydrochloride, 2,2'-azobis[2-methyl-N-(2-propenyl)propionamidine] dihydrochloride, 2,2'-azobis(2-methylpropionamidine) dihydrochloride, 2,2'-azobis[N-(2-hydroxyethyl)-2-methylpropionamidine] dihydrochloride, 2,2'-azobis[2-(5-methyl-2-imidazolin-2-yl)propane] dihydrochloride, 2,2'-azobis[2-(2-imidazolin-2-yl)propane] dihydrochloride, 2,2'-azobis[2-(4,5,6,7-tetrahydro-1H-1,3-diazepin- 2-yl)propane] dihydrochloride, 2,2'-azobis[2-(3,4,5,6-tetrahydropyrimidin-2-yl)propane] dihydrochloride, 2,2'-azobis[2-(5-hydroxy-3,4,5,6-tetrahydropyrimidin-2-yl) propane] dihydrochloride, 2,2'-azobis[2-[1-(2-hydroxyethyl)-2- " imidazolin-2-yl] propanol] dihydrochloride, and 2,2'-azobis[2-(2-imidazolin-2-yl)propane].

Non-limiting examples of suitable nonionic azo initiators include 2,2'-azobis(2,4-dimethylvaleronitrile), 2,2'-azobis(isobutyronitrile), 2,2'-azobis(methylbutyronitrile) and 1,1'-azobis(cyanocyclohexane), 2,2'-azobis[2-methyl-N-[1,1-bis(hydroxymethyl)-2-hydroxyethyl] propionamide] and 2,2'-azobis[2-methyl-N-(2-hydroxyethyl) propionamide].

Non-limiting examples of suitable redox pair initiators include tertiary butyl hydroperoxide (TBHP)/isoascorbic acid; TBHP/hydroxylamine; TBHP/sodium formaldehyde sulfoxylate.

In certain embodiments, the free radical initiator is present in an amount between 0.01 weight percent and 5 weight percent, such as between 0.05 weight percent and 2.0 weight percent, or, in some cases, between 0.1 weight percent and about 1.5 weight percent, based on the weight of the polymerizable ethylenically unsaturated monomer composition.

In certain embodiments, a chain transfer agent that is soluble in the monomer composition, such as alkyl mercaptans, for example, tertiary-dodecyl mercaptan, 2-mercaptoethanol, isooctyl mercaptopropionate, n-octyl mercaptan or 3-mercapto acetic acid is used in the polymerization of the ethylenically unsaturated polymerizable monomer composition. Other chain transfer agents such as ketones, for example, methyl ethyl ketone, and chlorocarbons such as chloroform can be used. In certain embodiments, the amount of chain transfer agent, if any, is from 0.1 to 6.0 weight percent by weight based on the weight of ethylenically unsaturated polymerizable monomer composition.

In certain embodiments, relatively high molecular weight multifunctional mercaptans may be substituted, all or partially, for the chain transfer agent. These molecules can, for example, range in molecular weight from about 94 to 1000 or more. Functionality can be from about 2 to about 4. Amounts of these multifunctional mercaptans, if used, may, in certain embodiments, be 0.1 to 6.0 percent by weight based on the weight of the ethylenically unsaturated polymerizable monomer composition.

In certain embodiments, the dispersions of the present invention are obtained by using 2 to 50 weight percent, such as 20 to 35 weight percent of the polymeric dispersant and from 50 to 98 weight percent, such as 65 to 80 weight percent by weight of the dispersed phase of the polymerizable ethylenically unsaturated monomer composition in the polymerization reaction. The percentage by weight being based on total weight of the dispersant and the ethylenically unsaturated polymerizable monomer composition.

In certain embodiments, for polymerization of the acrylic polymer in the presence of the dispersant, water is present in amounts of 40 to 90, such as 50 to 75 percent by weight, based on total weight of the dispersant, the dispersed phase and the water.

Besides water, the dispersing medium can, in certain embodiments, contain some organic cosolvents. In certain embodiments, the organic cosolvents are at least partially soluble with water. Examples of such solvents include oxygenated organic solvents, such as monoalkyl ethers of ethylene glycol, diethylene glycol, propylene glycol, and dipropylene glycol which contain from 1 to 10 carbon atoms in the alkyl group, such as the monoethyl and monobutyl ethers of these glycols. Examples of other at least partially water-miscible solvents include alcohols such as ethanol, isopropanol, butanol and diacetone alcohol. If used, the organic cosolvents are, in certain embodiments, used in amounts less than 10 percent by weight, such as less than 5 percent by weight, based on total weight of the dispersing phase.

As previously indicated, the dispersions of the present invention may comprise acrylic polymers that include active hydrogen functional groups, such as hydroxyl, primary and/or secondary amino, and/or sulfonium groups, which make them reactive at elevated temperatures with a curing agent. In certain embodiments, therefore, the dispersions of the present invention also comprise a curing agent, such as a curing agent that is stable in the dispersion at room temperature but reactive with the active hydrogens at elevated temperature, that is, from about 90°C to 260°C, to form a crosslinked product. Examples of suitable curing agents are described below.

If desired, other polymers may also be present in the dispersion, For example, the dispersions can be formulated with an additional ionic film forming polymer, such as a cationic salt group containing film forming polymer, which is electrodepositable on the cathode and which is different from the acrylic polymers described above to form electrodepositable coating compositions in accordance with certain embodiments of the present invention.

Suitable cationic electrodepositable polymers can include, for example, those that are substantially free of diene-derived polymeric material. For example, such resins include high throwpower amine salt group-containing resins which are the acid-solubilized reaction products of polyepoxides and primary and secondary amines such as are described in United States Patent No. 4,031,050 at col. 3, line 27 to col. 5, line 8, this portion of which is incorporated herein by reference. In some cases, these amine salt group containing resins are used in combination with a blocked isocyanate curing agent such as those discussed more fully below. In addition, the electrodepositable coating compositions of the present invention can include low throwpower resins such as cationic acrylic resins, such as those described in United States Patent Nos. 3,455,806 at col. 2, line 18 to col. 3, line 61 and 3,928,157 at col. 2, line 29 to col. 3, line 21, these portions of both of which are incorporated herein by reference.

Besides amine salt group-containing resins, quaternary ammonium salt group-containing resins can also be employed. Examples of these resins are those which are formed from reacting an organic polyepoxide with a tertiary amine acid salt. Such resins are described in United States Patent Nos. 3,962,165 at col. 2, line 3 to col. 11, line 7; 3,975,346 at col. 1, line 62 to col. 17, line 25 and 4,001,156 at col. 1, line 37 to col. 16, line 7, these portions of which are incorporated herein by reference. Examples of other suitable cationic resins include ternary sulfonium salt group-containing resins, such as those described in United States Patent No. 3,793,278 at col. 1, line 32 to col. 5, line 20, this portion of which is incorporated herein by reference. Also, cationic resins which cure via a transesterification mechanism, such as described in European Patent Application No. 12463B1at p. 2, line 1 to p. 6, line 25, this portion of which is incorporated herein by reference, can also be employed.

Also suitable are polymers that may be used to form photodegradation resistant electrodepositable coating compositions. Such polymers include the polymers comprising cationic amine salt groups which are derived from pendant and/or terminal amino groups that are disclosed in United States Patent Application Publication 2003/0054193 A1 at [0064] to [0088], this portion of which is incorporated herein by reference. Also suitable are the active hydrogen-containing, cationic salt group-containing resins derived from a polyglycidyl ether of a polyhydric phenol that is essentially free of aliphatic carbon atoms to which are bonded more than one aromatic group, which are described in United States Patent Application Publication US 2003/0054193 A1 at [0096] to [0123], this portion of which is incorporated herein by reference.

One feature of the dispersions of the present invention is that the polymeric component contained within the dispersion can have a relatively small particle size, which can result in a stable dispersion without the use of any low molecular weight surfactants. In certain embodiments of the present invention, the average particle size diameter of the dispersed phase is no more than 0.1 microns and, in some cases, no more than 0.06 microns. The particle sizes reported herein, and in the Examples, can be measured by photon correlation spectroscopy as described in International Standard ISO 13321 using a Malvern Zetasizer 3000HSa according to the following procedure. Approximately 10mL of ultrafiltered deionized water and 1 drop of a homogenous test sample are added to a clean 20mL vial and then mixed. A cuvet is cleaned and approximately half-filled with ultrafiltered deionized water, to which about 3-6 drops of the diluted sample is added. Once any air bubbles are removed, the cuvet is placed in the Zetasizer 3000HSa to determine if the sample is of the correct concentration using the Correlator Control window in the Zetasizer Software (100 to 400 KCts/sec). Particle size measurements are then made with the Zetasizer 3000HSa.

The resin solids content of the dispersions of the present invention depends upon the particular end use of the dispersion and is often not critical. Dispersions containing at least 1 percent by weight, such as from 5 to 40 percent by weight resin solids, are common. For electrodeposition use, resin solids contents of 5 to 20 percent by weight are often used. By resin solids is meant the non volatile organic content of the dispersion, i.e., organic materials which will not volatilize when heated to 110°C for 15 minutes and would exclude organic solvents.

As previously indicated, certain embodiments of the dispersions of the present invention can also include a curing agent to react with the reactive groups, such as active hydrogen groups, of the resin(s). Non-limiting examples of suitable curing agents are at least partially blocked polyisocyanates, aminoplast resins and phenolic resins, such as phenolformaldehyde condensates including allyl ether derivatives thereof.

Suitable at least partially blocked polyisocyanates include aliphatic polyisocyanates, aromatic polyisocyanates, and mixtures thereof. In certain embodiments, the curing agent comprises an at least partially blocked aliphatic polyisocyanate. Suitable at least partially blocked aliphatic polyisocyanates include, for example, fully blocked aliphatic polyisocyanates, such as those described in United States Patent No. 3,984,299 at col. 1 line 57 to col. 3 line 15, this portion of which is incorporated herein by reference, or partially blocked aliphatic polyisocyanates that are reacted with the polymer backbone, such as is described in United States Patent No. 3,947,338 at col. 2 line 65 to col. 4 line 30, this portion of which is also incorporated herein by reference. By "blocked" is meant that the isocyanate groups have been reacted with a compound such that the resultant blocked isocyanate group is stable to active hydrogens at ambient temperature but reactive with active hydrogens in the film forming polymer at elevated temperatures usually between 90°C and 200C. In certain embodiments, the polyisocyanate curing agent is a fully blocked polyisocyanate with substantially no free isocyanate groups.

In certain embodiments, the curing agent comprises a diisocyanate, though, in other embodiments, higher polyisocyanates are used in lieu of or in combination with diisocyanates. Examples of aliphatic polyisocyanates suitable for use as curing agents include cycloaliphatic and araliphatic polyisocyanates such as 1,6-hexamethylene diisocyanate, isophorone diisocyanate, bis-(isocyanatocyclohexyl)methane, polymeric 1,6-hexamethylene diisocyanate, trimerized isophorone diisocyanate, norbornane diisocyanate and mixtures thereof. In certain embodiments of the present invention, the curing agent comprises a fully blocked polyisocyanate selected from a polymeric 1,6- hexamethylene diisocyanate, isophorone diisocyanate, and mixtures thereof. In other embodiments of the present invention the polyisocyanate curing agent comprises a fully blocked trimer of hexamethylene diisocyanate available as Desmodur N3300® from Bayer Corporation.

In certain embodiments, the polyisocyanate curing agent is at least partially blocked with at least one blocking agent selected from a 1,2-alkane diol, for example 1,2-propanediol; a 1,3-alkane diol, for example 1,3-butanediol; a benzylic alcohol, for example, benzyl alcohol; an allylic alcohol, for example, allyl alcohol; caprolactam; a dialkylamine, for example dibutylamine; and mixtures thereof. In certain embodiments, the polyisocyanate curing agent is at least partially blocked with at least one 1,2-allcane diol having three or more carbon atoms, for example 1,2-butanediol.

In certain embodiments, the blocking agent comprises other well known blocking agents such as aliphatic, cycloaliphatic, or aromatic alkyl monoalcohols or phenolic compounds, including, for example, lower aliphatic alcohols, such as methanol, ethanol, and n-butanol; cycloaliphatic alcohols, such as cyclohexanol; aromatic-alkyl alcohols, such as phenyl carbinol and methylphenyl carbinol; and phenolic compounds, such as phenol itself and substituted phenols wherein the substituents do not affect coating operations, such as cresol and nitrophenol. Glycol ethers and glycol amines may also be used as blocking agents. Suitable glycol ethers include ethylene glycol butyl ether, diethylene glycol butyl ether, ethylene glycol methyl ether and propylene glycol methyl ether. Other suitable blocking agents include oximes, such as methyl ethyl ketoxime, acetone oxime and cyclohexanone oxime.

Examples of suitable aminoplast resins include those described in United States Patent No. 3,937,679 at col. 16, line 3 to col. 17, line 47, this portion of which is hereby incorporated by reference. As is disclosed in the aforementioned portion of the '679 patent, the aminoplast can be used in combination with the methylol phenol ethers.

In some instances, a pigment composition, and if desired, various additives such as fillers, plasticizers, anti-oxidants, UV light absorbers, defoamers, fungicides, flow control agents, surfactants or wetting agents are included in the dispersions of the present invention. The pigment composition may be of the conventional types, comprising, for example, iron oxides, lead oxides, strontium chromate, carbon black, coal dust, titanium dioxide, talc, barium sulfate, as well as color pigments such as cadmium yellow, cadmium red, chromium yellow and the like. The pigment content of the dispersion is usually expressed as the pigment-to-resin weight ratio. In the practice of the present invention, the pigment-to-resin weight ratio is sometimes within the range of 0.03 to 0.35, when pigment is used. The other additives mentioned above are usually in the dispersion in amounts of 0.01 to 3 percent by weight based on total weight of resin solids.

In certain embodiments, the dispersions of the present invention are substantially free or, in some cases, completely free, of any diene-derived polymers.

In certain embodiments, for electrodeposition use, the dispersion of the present invention is placed in contact with an electrically conductive anode and an electrically conductive cathode with the surface to be coated being the cathode. Following contact with the dispersion, an adherent film of the coating composition is deposited on the cathode and a sufficient voltage is impressed between the electrodes. The conditions under which the electrodeposition is carried out are, in general, similar to those used in electrodeposition of other types of coatings. The applied voltage may be varied and can be, for example, as low as one volt to as high as several thousand volts, but is often between 50 and 500 volts. The current density is often between 0.5 ampere and 15 amperes per square foot and tends to decrease during electrodeposition indicating the formation of an insulating film.

In a cationic electrodeposition process, the metal substrate being coated, serving as a cathode, and an electrically conductive anode are placed in contact with a cationic electrodepositable composition. Upon passage of an electric current between the cathode and the anode while they are in contact with the electrodepositable composition, an adherent film of the electrodepositable composition will deposit in a substantially continuous manner on the electroconductive substrate.

In certain embodiments, the present invention is directed to methods for forming a multi-layer coating on an electrically conductive substrate comprising (a) depositing on the substrate an electrodepositable coating compositions, comprising a dispersion of the present invention, to form an electrodeposited coating over at least a portion of the substrate, the substrate serving as a cathode in an electrical circuit comprising the cathode and an anode, the cathode and the anode being immersed in the electrodepositable coating composition, wherein electric current is passed between the cathode and the anode to cause the coating to be electrodeposited over at least a portion of the substrate; (b) heating the coated substrate at a temperature and for a time sufficient to cure the electrodeposited coating on the substrate; (c) applying directly to the cured electrodeposited coating one or more pigment-containing coating compositions and/or one or more pigment-free coating compositions to form a top coat over at least a portion of the cured electrodeposited coating; and (d) heating the coated substrate of step (c) to a temperature and for a time sufficient to cure the top coat. In these methods, a non-ferrous anode, for example, anodes comprised of ruthenium oxide or carbon rods, are included in the circuit

Once the electrodepositable coating composition is electrodeposited over at least a portion of the electroconductive substrate, the coated substrate is heated to a temperature and for a time sufficient to cure the electrodeposited coating on the substrate. In certain embodiments, the coated substrate is heated to a temperature ranging from 250°F to 450°F (121.1°C to 232.2°C), such as from 275°F to 400°F (135°C to 204.4°C), or, in some cases, from 300°F to 360°F (149°C to 180°C). The curing time can be dependent upon the curing temperature as well as other variables, for example, film thickness of the electrodeposited coating, level and type of catalyst present in the composition and the like. For purposes of the present invention, all that is necessary is that the time be sufficient to effect cure of the electrodeposited coating on the substrate. For example, the curing time can range from 10 minutes to 60 minutes, and typically from 20 to 40 minutes.

In certain embodiments, the coated substrate is heated to a temperature of 360°F (180°C) or less for a time sufficient to effect cure of the electrodeposited coating on the substrate. The thickness of the resultant cured electrodeposited coating often ranges from 15 to 50 microns.

As used herein, the term "cure" as used in connection with a composition, e.g., "a cured composition" shall mean that any crosslinkable components of the composition are at least partially crosslinked. In certain embodiments of the present invention, the crosslink density of the crosslinkable components, i.e., the degree of crosslinking, ranges from 5% to 100% of complete crosslinking. In other embodiments, the crosslink density ranges from 35% to 85% or, in some cases, 50% to 85% of full crosslinking. One skilled in the art will understand that the presence and degree of crosslinking, i.e., the crosslink density, can be determined by a variety of methods, such as dynamic mechanical thermal analysis (DMTA) using a TA Instruments DMA 2980 DMTA analyzer conducted under nitrogen. This method determines the glass transition temperature and crosslink density of free films of coatings or polymers. These physical properties of a cured material are related to the structure of the crosslinked network. For purposes of the present invention, a cured composition, when subjected to double rubs with a cloth soaked in acetone, will endure at least 100 double rubs without removing the coating.

The aqueous dispersions of the present invention can also be used in non-electrophoretic coating applications such as flow, dip, spray and roll coating applications. For electrodeposition and non-electrophoretic coating applications, the coating compositions of the present invention can be applied to a variety of electroconductive substrates especially metal such as steel, aluminum, copper, magnesium and the like, but also including metallized plastic and conductive carbon-coated materials. For non-electrophoretic coating applications, compositions can be applied to the non-metallic substrates such as glass, wood and plastic.

In certain embodiments, therefore, the present invention is also directed to methods for coating an electroconductive substrate. In certain embodiments, such methods comprise (a) electrophoretically depositing on the substrate an electrodepositable coating composition, such as a composition comprising a dispersion of the present invention, to form an electrodeposited coating over at least a portion of the substrate, and (b) heating the coated substrate to a temperature and for a time sufficient to cure the electrodeposited coating on the substrate. In certain embodiments, such methods comprise (a) electrophoretically depositing on the substrate an electrodepositable coating composition comprising a dispersion of the present invention to form an electrodeposited coating over at least a portion of the substrate, (b) heating the coated substrate to a temperature and for a time sufficient to cure the electrodeposited coating on the substrate, (c) applying directly to the cured electrodeposited coating one or more pigment-containing coating compositions and/or one or more pigment-free coating compositions to form a top coat over at least a portion of the cured electrodeposited coating, and (d) heating the coated substrate of step (c) to a temperature and for a time sufficient to cure the top coat.

In these methods of the present invention, the electrodepositable coating composition can be electrophoretically deposited onto at least a portion of any of a variety of electroconductive substrates, such as those described earlier. For example, suitable metallic substrates can include ferrous metals and non-ferrous metals. Suitable ferrous metals include iron, steel, and alloys thereof. Non-limiting examples of useful steel materials include cold-rolled steel, galvanized (i.e., zinc coated) steel, electrogalvanized steel, stainless steel, pickled steel, GALVANNEAL®, GALVALUME®, and GALVAN® zinc-aluminum alloys coated upon steel, and combinations thereof. Useful non-ferrous metals include conductive carbon coated materials, aluminum, copper, zinc, magnesium and alloys thereof. Cold rolled steel also is suitable when pretreated with a solution such as a metal phosphate solution, an aqueous solution containing at least one Group IIIB or IVB metal, an organophosphate solution, an organophosphonate solution and combinations of the above as are discussed below. Combinations or composites of ferrous and non-ferrous metals can also be used.

In these methods of the present invention, the electrodepositable coating compositions can be applied to either bare metal or pretreated metal. By "bare metal" is meant a virgin metal substrate that has not been treated with a pretreatment composition such as conventional phosphating solutions, heavy metal rinses and the like. Additionally, for purposes of the present invention, bare metal substrates can include a cut edge of a substrate that is otherwise treated and/or coated over the non-edge surfaces of the substrate.

Before any treatment or application of any coating composition, the substrate optionally may be formed into an object of manufacture. A combination of more than one metal substrate can be assembled together to form such an object of manufacture.

Also, it should be understood that as used herein, an electrodepositable composition or coating formed "over" at least a portion of a "substrate" refers to a composition formed directly on at least a portion of the substrate surface, as well as a composition or coating formed over any coating or pretreatment material which was previously applied to at least a portion of the substrate.

That is, the "substrate" upon which the coating composition is electrodeposited can comprise any of the above-described electroconductive substrates to which one or more pretreatment and/or primer coatings have been previously applied. For example, the "substrate" can comprise a metallic substrate and a weldable primer coating over at least a portion of the substrate surface. The electrodepositable coating composition described above is then electrodeposited and cured over at least a portion thereof. One or more top coating compositions as described in detail below can be subsequently applied over at least a portion of the cured electrodeposited coating. '

For example, the substrate can comprise any of the foregoing electroconductive substrates and a pretreatment composition applied over at least a portion of the substrate, the pretreatment composition comprising a solution that contains one or more Group IIIB or IVB element-containing compounds or mixtures thereof solubilized or dispersed in a carrier medium, typically an aqueous medium. The Group IIIB and IVB elements are defined by the CAS Periodic Table of the Elements as shown, for example, in the Handbook of Chemistry and Physics, (60th Ed. 1980). Transition metal compounds and rare earth metal compounds typically are compounds of zirconium, titanium, hafnium, yttrium and cerium and mixtures thereof. Typical zirconium compounds may be selected from hexafluorozirconic acid, alkali metal and ammonium salts thereof, ammonium zirconium carbonate, zirconyl nitrate, zirconium carboxylates and zirconium hydroxy carboxylates such as hydrofluorozirconic acid, zirconium acetate, zirconium oxalate, ammonium zirconium glycolate, ammonium zirconium lactate, ammonium zirconium citrate; and mixtures thereof.

The pretreatment composition carrier also can contain a film-forming resin, for example, the reaction products of one or more alkanolamines and an epoxy-functional material containing at least two epoxy groups, such as those disclosed in United States Patent No. 5,653,823. Other suitable resins include water soluble and water dispersible polyacrylic acids such as those as disclosed in United States Patent Nos. 3,912,548 and 5,328,525; phenol-formaldehyde resins as described in United States Patent No. 5,662,746; water soluble polyamides such as those disclosed in WO 95/33869; copolymers of maleic or acrylic acid with allyl ether as described in Canadian patent application 2,087,352; and water soluble and dispersible resins including epoxy resins, aminoplasts, phenol-formaldehyde resins, tannins, and polyvinyl phenols as discussed in United States Patent No. 5,449,415.

Further, non-ferrous or ferrous substrates can be pretreated with a non-insulating layer of organophosphates or organophosphonates, such as those described in United States Patent Nos. 5,294,265 and 5,306,526. Such organophosphate or organophosphonate pretreatments are available commercially from PPG Industries, Inc. under the trade name NEPAL®. Application to the substrate of a non-conductive coating, such as NUPAL, typically is followed by the step of rinsing the substrate with deionized water prior to the coalescing of the coating. This ensures that the layer of the non-conductive coating is sufficiently thin to be non-insulating. The pretreatment coating composition can further comprise surfactants that function as aids to improve wetting of the substrate. Generally, the surfactant materials are present in an amount of less than about 2 weight percent on a basis of total weight of the pretreatment coating composition. Other optional materials in the carrier medium include defoamers and substrate wetting agents.

Due to environmental concerns, the pretreatment coating composition can be free of chromium-containing materials, i.e., the composition contains less than about 2 weight percent of chromium-containing materials (expressed as CrO₃), typically less than about 0.05 weight percent of chromium-containing materials.

In a typical pre-treatment process, before depositing the pretreatment composition upon the surface of the metal substrate, it is usual practice to remove foreign matter from the metal surface by thoroughly cleaning and degreasing the surface. The surface of the metal substrate can be cleaned by physical or chemical means, such as by mechanically abrading the surface or cleaning/degreasing with commercially available alkaline or acidic cleaning agents which are well know to those skilled in the art, such as sodium metasilicate and sodium hydroxide. A non-limiting example of a suitable cleaning agent is CHEMKLEEN® 163, an alkaline-based cleaner commercially available from PPG Pretreatment and Specialty Products of Troy, Mich. Acidic cleaners also can be used. Following the cleaning step, the metal substrate is usually rinsed with water in order to remove any residue. The metal substrate can be air-dried using an air knife, by flashing ' off the water by brief exposure of the substrate to a high temperature or by passing the substrate between squeegee rolls. The pretreatment coating composition can be deposited upon at least a portion of the outer surface of the metal substrate. Preferably, the entire outer surface of the metal substrate is treated with the pretreatment composition. The thickness of the pretreatment film can vary, but is generally less than 1 micrometer, such as from 1 to 500 nanometers, or, in some cases, from 10 to 300 nanometers.

The pretreatment coating composition may be applied to the surface of the metal substrate by any conventional application technique, such as by spraying, immersion or roll coating in a batch or continuous process. The temperature of the pretreatment coating composition at application is often 10°C to 85°C, such as 15°C to 60°C. The pH of the pretreatment coating composition at application often ranges from 2.0 to 5.5, such as 3.5 to 5.5. The pH of the medium may be adjusted using mineral acids such as hydrofluoric acid, fluoroboric acid, phosphoric acid, and the like, including mixtures thereof; organic acids such as lactic acid, acetic acid, citric acid, sulfamic acid, or mixtures thereof, and water soluble or water dispersible bases such as sodium hydroxide, ammonium hydroxide, ammonia, or amines such as triethylamine, methylethyl amine, or mixtures thereof.

Continuous processes often are used in the coil coating industry and also for mill application. The pretreatment coating composition can be applied by any of these conventional processes. For example, in the coil industry, the substrate typically is cleaned and rinsed and then contacted with the pretreatment coating composition by roll coating with a chemical coater. The treated strip is then dried by heating, painted and baked by conventional coil coating processes.

Mill application of the pretreatment composition can be by immersion, spray or roll coating applied to the freshly manufactured metal strip. Excess pretreatment composition is often removed by wringer rolls. After the pretreatment composition has been applied to the metal surface, the metal can be rinsed with deionized water and dried at room temperature or at elevated temperatures to remove excess moisture from the treated substrate surface and cure any curable coating components to form the pretreatment coating. Alternately, the treated substrate can be heated to, for example, a temperature ranging from 65°C to 125°C for 2 to 30 seconds to produce a coated substrate having a dried residue of the pretreatment coating composition thereon. If the substrate is already heated from the hot melt production process, no post application heating of the treated substrate is required to facilitate drying. The temperature and time for drying the coating will depend upon such variables as the percentage of solids in the coating, components of the coating composition and type of substrate.

The film coverage of the residue of the pretreatment composition generally ranges from 1 to 10,000 milligrams per square meter (mg/m²), such as 10 to 400 mg/m².

A layer of a weldable primer also can be applied to the substrate, whether or not the substrate has been pretreated. A typical weldable primer is BONAZINC® a zinc-rich mill applied organic film-forming composition, which is commercially available from PPG Industries, Inc., Pittsburgh, Pa. BONAZINC often is applied to a thickness of at least 1 micrometer, such as a thickness of 3 to 4 micrometers. Other weldable primers, such as iron phosphide-rich primers, are commercially available.

Once the electrodeposited coating is cured on the substrate in accordance with certain methods of the present invention, one or more pigment-containing coating compositions and/or one or more pigment-free coating compositions are applied directly to the cured electrodeposited coating. In the instance in which a single layer coating is desired, no topcoat application is necessary.

Non-limiting examples of suitable base coat compositions include waterborne base coats such as are disclosed in United States Patent Nos. 4,403,003; 4,147,679; and 5,071,904. Suitable clear coat compositions include, for example, those disclosed in United States Patent Nos. 4,650,718; 5,814,410; 5,891,981; and WO 98/14379. .

The top coat compositions can be applied by conventional means including brushing, dipping, flow coating, spraying and the like, but they are most often applied by spraying. The usual spray techniques and equipment for air spraying and electrostatic spraying and either manual or automatic methods can be used. After application of each top coat to the substrate, a film is formed on the surface of the substrate by driving organic solvent and/or water out of the film by heating or by an air-drying period.

Typically, the thickness of a pigmented base coat ranges from 0.1 to 5 mils (2.5 to 127 microns), such as 0.4 to 1.5 mils (10.2 to 38.1 microns). The thickness of a clear coat often ranges from 0.5 to 5 mils (12.7 to 127 microns), such as 1.0 to 3 mils (25.4 to 76.2 microns).

In some cases, the heating will be only for a short period of time and will be sufficient to ensure that any subsequently applied top coating can be applied without any dissolution occurring at the coating interfaces. Suitable drying conditions will depend on the particular top coat composition and on the ambient humidity (if the top coat composition is waterborne), but in some cases a drying time of from 1 to 5 minutes at a temperature of 80°F to 250°F (20°C to 121°C) is used. Between coats, the previously applied coat may be flashed, that is, exposed to ambient conditions for 1 to 20 minutes.

After application of the top coat composition(s), the coated substrate may be heated to a temperature and for a period of time sufficient to effect cure of the coating layer(s). In the curing operation, solvents are driven off and the film-forming materials of the top coats are each crosslinked. The heating or curing operation is often carried out at a temperature in the range of from 160F to 350°F (71°C to 177°C) but if needed, lower or higher temperatures may be used as necessary to activate crosslinking mechanisms. Cure is as defined as above.

Illustrating the invention are the following examples, which, however, are not to be considered as limiting the invention to their details. Unless otherwise indicated, all parts and percentages in the following examples, as well as throughout the specification, are by weight.

### EXAMPLES

### Example 1: Preparation of Polymeric Dispersant Composition

A composition comprising a polymeric dispersant was prepared using the materials and amounts set forth in Table 1. Amounts are listed in grams.

**TABLE 1**

| Component | Material | Amount |
|---|---|---|
| A | methylisobutyl ketone | 174.4 |
| | | |
| B | ethyl acrylate | 384.1 |
| | styrene | 294.0 |
| | hydroxyisopropyl methacrylate | 94.9 |
| | methyl methacrylate | 33.2 |
| | glycidyl methacrylate | 142.3 |
| | tert.-dodecyl mercaptan | 4.7 |
| | Vazo 67 | 16.6 |
| | Dowanol PNB² | 30.4 |
| | Dowanol PM³ | 15.2 |
| | methylisobutyl ketone | 12.3 |
| | | |
| C | Vazo 67 | 1.1 |
| | Dowanol PNB | 2.0 |
| | Dowanol PM | 1.0 |
| | methylisobutyl ketone | 0.8 |
| | | |
| D | Lupersol 7M50⁴ | 18.8 |
| | Dowanol PNB | 15.0 |
| | methylisobutyl ketone | 7.5 |
| | | |
| E | diethanolamine | 85.4 |
| | | |
| F | DETA diketimine⁵ | 71.5 |

| | | |
|---|---|---|
| 2,2'-azobis(2-methylbutyronotrile) available from Du Pont Specialty Chemicals. ²N-butoxypropanol solvent available form Dow Chemical Co. ³ Propylene glycol monomethyl ether solvent available form Dow Chemical Co. ⁴50% t-butyl peroxyacetate in mineral spirits available from Arkema Inc. ⁵ Diketimine formed from diethylene triamine and methylisobutyl ketone (72.69% solids in methylisobutyl ketone). | | |

To prepare the polymeric dispersant, component A was raised to reflux in a 3 liter flask fitted with a stirrer, thermocouple, nitrogen inlet and a Dean and Stark condenser. The temperature was adjusted throughout the process to maintain reflux unless noted otherwise. The materials of component B were added at a uniform rate over 150 minutes, followed immediately by the materials of component C over 10 minutes. After a further 10 minutes the materials of component D were added over 10 minutes. 90 minutes later component E was added followed, 90 minutes later by component F. After 60 minutes the heat source was removed.

The resulting polymeric dispersant composition had a solids content of 68.4 weight percent, a weight average molecular weight of 359,280, and a Z-average molecular weight of 1,710,388, wherein the molecular weights are obtained by gel permeation chromatography carried out in dimethylformamide (DMF) using polystyrene standards.

### Example 2: Preparation of Electrodepositable Aqueous- Resinous Dispersion

An electrodepositable aqueous resinous dispersion was prepared using the materials and amounts set forth in Table 2. Amounts are listed in grams.

**TABLE 2**

| Component | Material | Amount |
|---|---|---|
| A | Dispersant of Example 1 | 79.71 |
| | Purac HS 50 | 5.63 |
| | deionized water | 249.12 |
| | | |
| B | Dispersant of Example 1 | 9.32 |
| | Purac HS 50 | 0.63 |
| | butyl acrylate | 127.71 |
| | 4-hydroxybutyl acrylate | 14.19 |
| | allyl methacrylate | 4.39 |
| | | |
| C | deionized water | 106.49 |
| | aqueous hydrogen peroxide (35%) | 2.22 |
| | | |
| D | iso-ascorbic acid | 0.41 |
| | deionized water | 100.18 |

| | | |
|---|---|---|
| ¹50% aqueous lactic acid available from Purac America Inc. | | |

The materials of component A were mixed in a flask fitted with a stirrer, thermocouple, nitrogen inlet and condenser. 50 g of water was added and 50 g of distillate was removed under reduced pressure. The temperature was adjusted to 50 °C and nitrogen was bubbled through the mixture for 30 minutes.

The materials of component B were mixed in a separate vessel, the materials of component C were added and the mixture was dispersed using a high shear homogenizer.

The dispersion was added to a dropping funnel and the materials of component D were added to another dropping funnel. The contents of the funnels were added to the flask at a uniform rate over three hours. A temperature of 50 °C was maintained throughout this period and for one hour after the addition was complete.

The resulting electrodepositable aqueous resinous dispersion had a solids content of 28.5 weight percent. The polymeric components of the dispersion had a weight average molecular weight of 740,062 and a Z-average molecular weight of 1,050,307, wherein the molecular weights are obtained by gel permeation chromatography carried out in dimethylformamide (DMF) using polystyrene standards. The polymeric particles had an average particle size of 520Å.

### Example 3: Preparation of Electrodepositable Aqueous Resinous Dispersion

An electrodepositable aqueous resinous dispersion was prepared using the materials and amounts set forth in Table 3. Amounts are listed in grams.

**TABLE 3**

| Component | Material | Amount |
|---|---|---|
| A | Dispersant of Example 1 | 79.01 |
| | Purac HS 50 | 5.58 |
| | deionized water | 246.92 |
| | m-TMI^{I} | 1.85 |
| | | |
| B | Dispersant of Example 1 | 9.24 |
| | Purac HS 50 | 0.62 |
| | butyl acrylate | 126.58 |
| | 4-hydroxybutyl acrylate | 14.19 |
| | allyl methacrylate | 4.35 |
| | | |
| C | deionized water | 105.55 |
| | aqueous hydrogen peroxide (35%) | 2.20 |
| | | |
| D | iso-ascorbic acid | 0.41 |
| | deionized water | 103.62 |

| | | |
|---|---|---|
| ¹ 3-isopropenyl α,α-dimethylbenzyl isocyanate available from Cytec Industries. | | |

The materials of component A were mixed in a flask fitted with a stirrer, thermocouple, nitrogen inlet and condenser. 50 g of water was added and 50 g of distillate was removed under reduced pressure. The temperature was adjusted to 50 °C and nitrogen was bubbled through the mixture for 30 minutes.

The materials of components B were mixed in a separate vessel, the materials of component C were added and the mixture was dispersed using a high shear homogenizer.

The dispersion was added to a dropping funnel and the materials of component D were added to another dropping funnel. The contents of the funnels were added to the flask at a uniform rate over three hours. A temperature of 50 or was maintained throughout this period and for one hour after the addition was complete.

The resulting electrodepositable aqueous resinous dispersion had a solids content of 28.5 weight percent. The polymeric components of the dispersion had a weight average molecular weight of 835,588 and a Z-average molecular weight of 1,138,915, wherein the molecular weights are obtained by gel permeation chromatography carried out in dimethylformamide (DMF) using polystyrene standards. The polymeric particles had an average particle size of 361Å.

### Example 4: Preparation of Polymeric Dispersant

A composition comprising a polymeric dispersant was prepared using the materials and amounts set forth in Table 4. Amounts are listed in grams.

**TABLE 4**

| Component | Materials | Amount |
|---|---|---|
| A | methylisobutyl ketone | 97.79 |
| | | |
| B | ethyl acrylate | 215.40 |
| | styrene | 164.87 |
| | hydroxyisopropyl methacrylate | 53.19 |
| | methyl methacrylate | 18.61 |
| | glycidyl methacrylate | 79.79 |
| | tert.-dodecyl mercaptan | 2.65 |
| | Vazo 67 | 9.30 |
| | Dowanol PNB | 17.02 |
| | Dowanol PM | 8.51 |
| | methylisobutyl ketone | 6.90 |
| | | |
| C | Vazo 67 | 0.62 |
| | Dowanol PNB | 1.13 |
| | Dowanol PM | 0.57 |
| | methylisobutyl ketone | 0.46 |
| | | |
| D | Lupersol 7M50 | 10.55 |
| | Dowanol PNB | 8.42 |
| | methylisobutyl ketone | 4.21 |
| | | |
| E | Diethanolamine | 47.87 |
| | | |
| F | DETA diketimine | 40.10 |
| | | |
| G | butyl Cellosolve | 128.30 |
| | | |
| H | Purac HS 50 | 58.27 |
| | deionized water | 1489.86 |

| | | |
|---|---|---|
| ¹ethylene glycol monobutyl ether available from Dow Chemical. | | |

Component A was raised to reflux in a 3 liter flask fitted with a stirrer, thermocouple, nitrogen inlet and a Dean and Stark condenser. The temperature was adjusted throughout the process to maintain reflux unless noted otherwise. The materials of component B were added at a uniform rate over 150 minutes, followed immediately by the materials of component C over 10 minutes. After a further 10 minutes, the materials of component D were added over 10 minutes. 90 minutes later component E was added followed, 90 minutes later by component F. After 60 minutes component G was added and the temperature was allowed to fall to 105°C.

Meanwhile, the materials of component H were heated to 50 °C in a separate vessel. 824.7 g of the reaction mixture were the poured into component H under rapid agitation. 300 g of deionized water was added to the resulting dispersion and 300 g of distillate was removed by distillation under reduced pressure at 60°C.

The resulting dispersant composition had a solids content of 18.5 weight percent. The polymeric components of the dispersion had a weight average molecular weight of 835,588 and a Z-average molecular weight of 1,138,915, wherein the molecular weights are obtained by gel permeation chromatography carried out in dimethylformamide (DMF) using polystyrene standards.

### Example 5: Preparation of Electrodepositable Aqueous Resinous Dispersion

An electrodepositable aqueous resinous dispersion was prepared using the materials and amounts set forth in Table 5. Amounts are listed in grams.

**TABLE 5**

| | Component | Mass (/g) |
|---|---|---|
| A | Dispersant of Example 4 | 300.87 |
| | | |
| B | Dispersant of Example 4 | 33.77 |
| | methyl methacrylate | 123.36 |
| | | |
| C | deionized water | 82.47 |
| | aqueous hydrogen peroxide (35%) | 2.23 |
| | | |
| D | iso-ascorbic acid | 0.41 |
| | deionized water | 150.30 |
| | | |
| E | deionized water | 3.23 |
| | aqueous hydrogen peroxide (35%) | 0.06 |
| | | |
| F | iso-ascorbic acid | 0.06 |
| | deionized water | 3.23 |

Component A was added to a flask fitted with a stirrer, thermocouple, nitrogen inlet and condenser. The temperature was adjusted to 50 °C and nitrogen was bubbled through the mixture for 30 minutes. The materials of component B were mixed in a separate vessel, the materials of component C were added and the mixture was dispersed using a high shear homogenizer.

The dispersion was added to a dropping funnel and the materials of component D were added to another dropping funnel. The contents of the funnels were added to the flask at a uniform rate over three hours. A temperature of 50°C was maintained throughout this period and for 30 minutes after the addition was complete. The materials of components E and F were then added and a temperature of 50 or was maintained for a further 30 minutes.

The resulting electrodepositable aqueous resinous dispersion had a solids content of 21.7 weight percent. The polymeric components of the dispersion had a weight average molecular weight of 211,159 and a Z-average molecular weight of 563,064, wherein the molecular weights are obtained by gel permeation chromatography carried out in dimethylformamide (DMF) using polystyrene standards. The polymeric particles had an average particle size of 206Å. The dispersion had 0.107 milliequivalents of cationic salt groups per gram of polymer solids.

### Example 6: Preparation of Electrodepositable Aqueous Resinous Dispersion

An electrodepositable aqueous resinous dispersion was prepared using the materials and amounts set forth in Table 6. Amounts are listed in grams.

**TABLE 6**

| Component | Material | Amount |
|---|---|---|
| A | Dispersant of Example 1 | 293.93 |
| | deionized water | 45.59 |
| | | |
| B | Dispersant of Example 1 | 32.65 |
| | butyl acrylate | 129.64 |
| | 4-hydroxybutyl acrylate | 14.40 |
| | hexanediol diacrylate | 4.46 |
| | | |
| C | deionized water | 85.55 |
| | aqueous hydrogen peroxide (35%) | 2.25 |
| | | |
| D | iso-ascorbic acid | 0.42 |
| | deionized water | 84.44 |
| | | |
| E | deionized water | 3.27 |
| | aqueous hydrogen peroxide (35%) | 0.07 |
| | | |
| F | iso-ascorbic acid | 0.07 |
| | deionized water | 3.27 |

The materials of component A were added to a flask fitted with a stirrer, thermocouple, nitrogen inlet and condenser. The temperature was adjusted to 50°C and nitrogen was bubbled through the mixture for 30 minutes. The materials of component B were mixed in a separate vessel, the materials of component C were added and the mixture was dispersed using a high shear homogenizer.

The dispersion was added to a dropping funnel and the materials of component D were added to another dropping funnel. The contents of the funnels were added to the flask at a uniform rate over three hours. A temperature of 50°C was maintained throughout this period and for 30 minutes after the addition was complete. The materials of components E and F were then added and a temperature of 50°C was maintained for a further 30 minutes.

The resulting electrodepositable aqueous resinous dispersion had a solids content of 29.1 weight percent. The polymeric components of the dispersion had a weight average molecular weight of 477,212 and a Z-average molecular weight of 1,170,418, wherein the molecular weights are obtained by gel permeation chromatography carried out in dimethylformamide (DMF) using polystyrene standards. The polymeric particles had an average particle size of 427Å. The dispersion had 0.102 milliequivalents of cationic salt groups per gram of polymer solids.

### Example 7: Preparation of Polymeric Dispersant

A composition comprising a polymeric dispersant was prepared using the materials and amounts set forth in Table 7. Amounts are listed in grams.

**TABLE 7**

| Component | Material | Amount |
|---|---|---|
| A | methylisobutyl ketone | 97.79 |
| | | |
| B | butyl acrylate | 398.88 |
| | hydroxyisopropyl methacrylate | 53.19 |
| | glycidyl methacrylate | 79.79 |
| | tert.-dodecyl mercaptan | 2.65 |
| | Vazo 67 | 9.30 |
| | Dowanol PNB | 17.02 |
| | Dowanol PM | 8.51 |
| | methylisobutyl ketone | 6.90 |
| | | |
| C | Vazo 67 | 0.62 |
| | Dowanol PNB | 1.13 |
| | Dowanol PM | 0.57 |
| | methylisobutyl ketone | 0.46 |
| | | |
| D | Lupersol 7M50 | 10.55 |
| | Dowanol PNB | 8.42 |
| | methylisobutyl ketone | 4.21 |
| | | |
| E | diethanolamine | 47.87 |
| | | |
| F | DETA diketimine | 40.10 |
| | | |
| G | butyl Cellosolve | 128.30 |
| | | |
| H | Purac HS 50 | 58.27 |
| | deionized water | 1489.86 |

Component A was raised to reflux in a 3 liter flask fitted with a stirrer, thermocouple, nitrogen inlet and a Dean and Stark condenser. The temperature was adjusted throughout the process to maintain reflux unless noted otherwise. The materials of component B were added at a uniform rate over 150 minutes, followed immediately by the materials of component C over 10 minutes. After a further 10 minutes, the materials of component D were added over 10 minutes. 90 minutes later component E was added followed, 90 minutes later by component F. After 60 minutes component G was added and the temperature was allowed to fall to 105°C.

Meanwhile the materials of component H were heated to 50°C in a separate vessel. 824.7 g of the reaction mixture were the poured into components H under rapid agitation. 300 g of deionized water was added to the resulting dispersion and 300 g of distillate was removed by distillation under reduced pressure at 60°C.

The resulting dispersant composition had a solids content of 17.9 weight percent. The polymeric components of the dispersion had a weight average molecular weight of 48,051 and a Z-average molecular weight of 212,317, wherein the molecular weights are obtained by gel permeation chromatography carried out in dimethylformamide (DMF) using polystyrene standards.

### Example 8: Preparation of Electrodepositable Aqueous Resinous Dispersion

An electrodepositable aqueous resinous dispersion was prepared using the materials and amounts set forth in Table 8. Amounts are listed in grams.

**TABLE 8**

| | Component | Mass (/g) |
|---|---|---|
| A | Dispersant of Example 7 | 911.35 |
| | | |
| B | Dispersant of Example 7 | 107.43 |
| | butyl acrylate | 192.64 |
| | | |
| C | deionized water | 238.44 |
| | aqueous hydrogen peroxide (35%) | 3.32 |
| | | |
| D | iso-ascorbic acid | 0.61 |
| | deionized water | 26.56 |
| | | |
| E | deionized water | 9.63 |
| | aqueous hydrogen peroxide (35%) | 0.19 |
| | | |
| F | iso-ascorbic acid | 0.19 |
| | deionized water | 9.63 |

Component A was added to a flask fitted with a stirrer, thermocouple, nitrogen inlet and condenser. The temperature was adjusted to 50°C and nitrogen was bubbled through the mixture for 30 minutes. The materials of component B were mixed in a separate vessel, the materials of component C were added and the mixture was dispersed using a high shear homogenizer.

The dispersion was added to a dropping funnel and the materials of component D were added to another dropping funnel. The contents of the funnels were added to the flask at a uniform rate over three hours. A temperature of 50°C was maintained throughout this period and for 30 minutes after the addition was complete. The materials of components E and F were then added and a temperature of 50°C was maintained for a further 30 minutes.

The resulting electrodepositable aqueous resinous dispersion had a solids content of 24.7 weight percent. The polymeric components of the dispersion had a weight average molecular weight of 101,922 and a Z-average molecular weight of 398,315, wherein the molecular weights are obtained by gel permeation chromatography carried out in dimethylformamide (DMF) using polystyrene standards. The polymeric particles had an average particle size of 1089Å. The dispersion had 0.141 milliequivalents of cationic salt groups per gram of polymer solids.

### Example 9: Preparation of Polymeric Dispersant

A composition comprising a polymeric dispersant was prepared using the materials and amounts set forth in Table 9. Amounts are listed in grams.

**TABLE 9**

| Component | Material | Amount |
|---|---|---|
| A | methylisobutyl ketone | 174.39 |
| | | |
| B | ethyl acrylate | 384.11 |
| | styrene | 294.00 |
| | hydroxyisopropyl methacrylate | 94.85 |
| | methyl methacrylate | 33.19 |
| | glycidyl methacrylate | 142.28 |
| | tert.-dodecyl mercaptan | 4.73 |
| | Vazo 67 | 16.59 |
| | Dowanol PNB | 30.36 |
| | Dowanol PM | 15.17 |
| | methylisobutyl ketone | 12.30 |
| | | |
| C | Vazo 67 | 1.11 |
| | Dowanol PNB | 2.02 |
| | Dowanol PM | 1.01 |
| | methylisobutyl ketone | 0.82 |
| | | |
| D | Lupersol 7M50 | 18.82 |
| | Dowanol PNB | 15.02 |
| | methylisobutyl ketone | 7.51 |
| | | |
| E | diethanolamine | 85.37 |
| | | |
| F | DETA diketimine | 71.52 |
| | | |
| G | butyl Cellosolve | 228.79 |
| | | |
| H | Purac HS 50 | 103.91 |
| | deionized water | 4656.78 |

Component A was raised to reflux in a 3 liter flask fitted with a stirrer, thermocouple, nitrogen inlet and a Dean and Stark condenser. The temperature was adjusted throughout the process to maintain reflux unless noted otherwise. The materials of component B were added at a uniform rate over 150 minutes, followed immediately by the materials of component C over 10 minutes. After a further 10 minutes the materials of component D were added over 10 minutes. 90 minutes later component E was added followed, 90 minutes later by component F. After 60 minutes component G was added and the temperature was allowed to fall to 105°C.

. Meanwhile the materials of component H were heated to 50°C in a separate vessel. 1470.6 g of the reaction mixture were the poured into components H under rapid agitation. 500 g of deionized water was added to the resulting dispersion and 500 g of distillate was removed by distillation under reduced pressure at 60°C.

The resulting dispersant composition had a solids content of 18.8 weight percent. The polymeric components of the dispersion had a weight average molecular weight of 145,931 and a Z-average molecular weight of 486,340, wherein the molecular weights are obtained by gel permeation chromatography carried out in dimethylformamide (DMF) using polystyrene standards.

### Example 10: Preparation of Electrodepositable Aqueous Resinous Dispersion

An electrodepositable aqueous resinous dispersion was prepared using the materials and amounts set forth in Table 10. Amounts are listed in grams.

**TABLE 10**

| Component | Material | Amount |
|---|---|---|
| A | Dispersant of Example 9 | 293.92 |
| | deionized water | 45.59 |
| | | |
| B | Dispersant of Example 9 | 32.65 |
| | styrene | 66.83 |
| | ethyl acrylate | 66.83 |
| | 4-hydroxybutyl acrylate | 14.85 |
| | | |
| C | deionized water | 85.54 |
| | aqueous hydrogen peroxide (35%) | 2.25 |
| | | |
| D | iso-ascorbic acid | 0.42 |
| | deionized water | 84.46 |
| | | |
| E | deionized water | 3.27 |
| | aqueous hydrogen peroxide (35%) | 0.07 |
| | | |
| F | iso-ascorbic acid | 0.07 |
| | deionized water | 3.27 |

The materials of component A were added to a flask fitted with a stirrer, thermocouple, nitrogen inlet and condenser. The temperature was adjusted to 50°C and nitrogen was bubbled through the mixture for 30 minutes. The materials of component B were mixed in a separate vessel, the materials of component C were added and the mixture was dispersed using a high shear homogenizer.

The dispersion was added to a dropping funnel and the materials of component D were added to another dropping funnel. The contents of the funnels were added to the flask at a uniform rate over three hours. A temperature of 50°C was maintained throughout this period and for 30 minutes after the addition was complete. The materials of components E and F were then added and a temperature of 50°C was maintained for a further 30 minutes.

The resulting electrodepositable aqueous resinous dispersion had a solids content of 26.3 weight percent. The polymeric components of the dispersion had a weight average molecular weight of 281,518 and a Z-average molecular weight of 685,289, wherein the molecular weights are obtained by gel permeation chromatography carried out in dimethylformamide (DMF) using polystyrene standards. The polymeric particles had an average particle size of 418Å. The dispersion had 0.104 milliequivalents of cationic salt groups per gram of polymer solids.

### Example 11: Preparation of Electrodepositable Aqueous Resinous Dispersion

An electrodepositable aqueous resinous dispersion was prepared using the materials and amounts set forth in Table 11. Amounts are listed in grams.

**TABLE 11**

| Component | Material | Amount |
|---|---|---|
| A | Dispersant of Example 9 | 293.92 |
| | deionized water | 45.59 |
| | | |
| B | Dispersant of Example 9 | 32.65 |
| | Styrene | 66.83 |
| | ethyl acrylate | 62.37 |
| | 4-hydroxybutyl acrylate | 14.85 |
| | SR-351H¹ | 4.46 |
| | | |
| C | deionized water | 85.54 |
| | aqueous hydrogen peroxide (35%) | 2.25 |
| | | |
| D | iso-ascorbic acid | 0.42 |
| | deionized water | 84.46 |
| | | |
| E | deionized water | 3.27 |
| | aqueous hydrogen peroxide (35%) | 0.07 |
| | | |
| F | iso-ascorbic acid | 0.07 |
| | deionized water | 3.27 |

| | | |
|---|---|---|
| ¹ trimethylolpropane triacrylate available from Sartomer. | | |

The materials of component A were added to a flask fitted with a stirrer, thermocouple, nitrogen inlet and condenser. The temperature was adjusted to 50°C and nitrogen was bubbled through the mixture for 30 minutes. The materials of component B were mixed in a separate vessel, the materials of component C were added and the mixture was dispersed using a high shear homogenizer.

The dispersion was added to a dropping funnel and the materials of component D were added to another dropping funnel. The contents of the funnels were added to the flask at a uniform rate over three hours. A temperature of 50°C was maintained throughout this period and for 30 minutes after the addition was complete. The materials of components E and F were then added and a temperature of 50°C was maintained for a further 30 minutes.

The resulting electrodepositable aqueous resinous dispersion had a solids content of 26.5 weight percent. The polymeric components of the dispersion had a weight average molecular weight of 617,390 and a Z-average molecular weight of 1,116,802, wherein the molecular weights are obtained by gel permeation chromatography carried out in dimethylformamide (DMF) using polystyrene standards. The polymeric particles had an average particle size of 423Å. The dispersion had 0.106 milliequivalents of cationic salt groups per gram of polymer solids.

### Example 12: Preparation of Electrodepositable Aqueous Resinous Dispersion

An electrodepositable aqueous resinous dispersion was prepared using the materials and amounts set forth in Table 12. Amounts are listed in grams.

**TABLE 12**

| Component | Material | Amount |
|---|---|---|
| A | Dispersant of Example 9 | 869.79 |
| | iso-ascorbic acid | 0.95 |
| | | |
| B | styrene | 152.75 |
| | ethyl acrylate | 152.75 |
| | 4-hydroxybutyl acrylate | 33.95 |
| | | |
| C | deionized water | 368.84 |
| | aqueous hydrogen peroxide (35%) | 5.14 |
| | | |
| D | t-butyl hydroperoxide 70X¹ | 0.75 |
| | deionized water | 7.47 |
| | | |
| E | deionized water | 7.47 |
| | iso-ascorbic acid | 0.15 |

| | | |
|---|---|---|
| ¹70% by weight t-butyl hydroperoxide in water available from Arkema Inc. | | |

The materials of component A were added to a flask fitted with a stirrer, thermocouple, nitrogen inlet and condenser. The temperature was adjusted to 50°C and nitrogen was bubbled through the mixture for 30 minutes. The materials of component B were mixed and added to a dropping funnel. The materials of component C were mixed and added to another dropping funnel. The contents of the funnels were added to the flask at a uniform rate over three hours. A temperature of 50°C was maintained throughout this period and for 30 minutes after the addition was complete. The materials of component E were added to the flask and the materials of component D were then added over 30 minutes. A temperature of 50°C was maintained for a further 60 minutes. Methylisobutylketone was removed by distillation under reduced pressure at 50°C and then deionized water was added to adjust the solids content to about 30%.

The resulting electrodepositable aqueous resinous dispersion had a solids content of 30.6 weight percent. The polymeric components of the dispersion had a weight average molecular weight of 629,219 and a Z-average molecular weight of 1,630,143, wherein the molecular weights are obtained by gel permeation chromatography carried out in dimethylformamide (DMF) using polystyrene standards. The polymeric particles had an average particle size of 275Å. The dispersion had 0.102 milliequivalents of cationic salt groups per gram of polymer solids.

### Example 13: Preparation of Electrodepositable Aqueous Resinous Dispersion

An electrodepositable aqueous resinous dispersion was prepared using the materials and amounts set forth in Table 13. Amounts are listed in grams.

**TABLE 13**

| Component | Material | Amount |
|---|---|---|
| A | Dispersant of Example 9 | 869.79 |
| | iso-ascorbic acid | 0.95 |
| | | |
| B | Styrene | 67.89 |
| | methyl methacrylate | 237.61 |
| | 4-hydroxybutyl acrylate | 33.95 |
| | | |
| C | deionized water | 368.84 |
| | aqueous hydrogen peroxide (35%) | 5.14 |
| | | |
| D | t-butyl hydroperoxide 70X¹ | 0.75 |
| | deionized water | 7.47 |
| | | |
| E | deionized water | 7.47 |
| | iso-ascorbic acid | 0.15 |

The materials of component A were added to a flask fitted with a stirrer, thermocouple, nitrogen inlet and condenser. The temperature was adjusted to 50°C and nitrogen was bubbled through the mixture for 30 minutes. The materials of component B were mixed and added to a dropping funnel. The materials of component C were mixed and added to another dropping funnel. The contents of the funnels were added to the flask at a uniform rate over three hours. A temperature of 50°C was maintained throughout this period and for 30 minutes after the addition was complete. The materials of component E were added to the flask and the materials of component D were then added over 30 minutes. A temperature of 50°C was maintained for a further 60 minutes. Methylisobutylketone was removed by distillation under reduced pressure at 50°C and then deionized water was added to adjust the solids content to about 30%.

The resulting electrodepositable aqueous resinous dispersion had a solids content of 30.4 weight percent. The polymeric components of the dispersion had a weight average molecular weight of 587,747 and a Z-average molecular weight of 1,689,019, wherein the molecular weights are obtained by gel permeation chromatography carried out in dimethylformamide (DMF) using polystyrene standards. The polymeric particles had an average particle size of 356Å. The dispersion had 0.099 milliequivalents of cationic salt groups per gram of polymer solids.

### Example 14: Preparation of Electrodepositable Aqueous Resinous Dispersion

An electrodepositable aqueous resinous dispersion was prepared using the materials and amounts set forth in Table 14. Amounts are listed in grams.

**TABLE 14**

| Component | Material | Amount |
|---|---|---|
| A | Dispersant of Example 9 | 869.79 |
| | iso-ascorbic acid | 0.95 |
| | | |
| B | Styrene | 67.89 |
| | methyl methacrylate | 227.42 |
| | 4-hydroxybutyl acrylate | 33.95 |
| | SR-351H | 10.18 |
| | | |
| C | Deionized water | 368.84 |
| | aqueous hydrogen peroxide (35%) | 5.14 |
| | | |
| D | t-butyl hydroperoxide 70X¹ | 0.75 |
| | Deionized water | 7.47 |
| | | |
| E | Deionized water | 7.47 |
| | iso-ascorbic acid | 0.15 |

| | | |
|---|---|---|
| ¹ trimethylolpropane triacrylate available from Sartomer. | | |

The materials of component A were added to a flask fitted with a stirrer, thermocouple, nitrogen inlet and condenser. The temperature was adjusted to 50°C and nitrogen was bubbled through the mixture for 30 minutes. The materials of component B were mixed and added to a dropping funnel. The materials of component C were mixed and added to another dropping funnel. The contents of the funnels were added to the flask at a uniform rate over three hours. A temperature of 50°C was maintained throughout this period and for 30 minutes after the addition was complete. The materials of components E were added to the flask and the materials of component D were then added over 30 minutes. A temperature of 50°C was maintained for a further 60 minutes. Methylisobutylketone was removed by distillation under reduced pressure at 50°C and then deionized water was added to adjust the solids content to about 30%.

The resulting electrodepositable aqueous resinous dispersion had a solids content of 29.0 weight percent. The polymeric components of the dispersion had a weight average molecular weight of 831,516 and a Z-average molecular weight of 1,149,709, wherein the molecular weights are obtained by gel permeation chromatography carried out in dimethylformamide (DMF) using polystyrene standards. The polymeric particles had an average particle size of 164Å. The dispersion had 0.096 milliequivalents of cationic salt groups per gram of polymer solids.

### Example 15: Preparation of Electrodepositable Aqueous Resinous Dispersion

An electrodepositable aqueous resinous dispersion was prepared using the materials and amounts set forth in Table 15. Amounts are listed in grams.

**TABLE 15**

| Component | Material | Amount |
|---|---|---|
| A | Dispersant of Example 9 | 1739.61 |
| | iso-ascorbic acid | 1.90 |
| | | |
| B | styrene | 305.50 |
| | ethyl acrylate | 285.11 |
| | 4-hydroxybutyl acrylate | 67.90 |
| | SR-351H | 20.37 |
| | | |
| C | deionized water | 737.65 |
| | aqueous hydrogen peroxide (35%) | 10.29 |
| | | |
| D | t-butyl hydroperoxide 70X | 1.49 |
| | deionized water | 14.94 |
| | | |
| E | deionized waster | 14.94 |
| | iso-ascorbic acid | 0.30 |

The materials of component A were added to a flask fitted with a stirrer, thermocouple, nitrogen inlet and condenser. The temperature was adjusted to 50°C and nitrogen was bubbled through the mixture for 30 minutes. The materials of component B were mixed and added to a dropping funnel. The materials of component C were mixed and added to another dropping funnel. The contents of the funnels were added to the flask at a uniform rate over three hours. A temperature of 50°C was maintained throughout this period and for 30 minutes after the addition was complete. The materials of component E were added to the flask and the materials of component D were then added over 30 minutes. A temperature of 50°C was maintained for a further 60 minutes. Methylisobutylketone was removed by distillation under reduced pressure at 50°C and then deionized water was added to adjust the solids content to about 30%.

The resulting electrodepositable aqueous resinous dispersion had a solids content of 29.9 weight percent. The polymeric components of the dispersion had a weight average molecular weight of 929,982 and a Z-average molecular weight of 1,280,259, wherein the molecular weights are obtained by gel permeation chromatography carried out in dimethylformamide (DMF) using polystyrene standards. The polymeric particles had an average particle size of 624Å. The dispersion had 0.099 milliequivalents of cationic salt groups per gram of polymer solids.

### Example 16: Preparation of Polymeric Dispersant

A composition comprising a polymeric dispersant was prepared using the materials and amounts set forth in Table 16. Amounts are listed in grams.

**TABLE 16**

| Component | Material | Amount |
|---|---|---|
| A | Epon 828¹ | 680.90 |
| | Bisphenol A² | 199.20 |
| | Polyol³ | 242.90 |
| | methylisobutyl ketone | 59.10 |
| | | |
| B | N,N-dimethylbenzylamine | 0.77 |
| | | |
| C | N,N-dimethylbenzylamine | 2.19 |
| | | |
| D | DETA diketimine | 67.86 |
| | N-methyl ethanolamine | 58.02 |
| | methylisobutyl ketone | 122.09 |
| | | |
| E | Epon 828 in MiBK⁴ | 9.41 |
| | | |
| F | deionized water | 27.50 |
| | | |
| G | Epon 828 in MiBK | 9.41 |
| | | |
| H | butyl Cellosolve | |
| | | |
| I | Purac HS 50 | 49.53 |
| | deionized water | 646.19 |
| | | |
| J | deionized water | 4107.19 |

| | | |
|---|---|---|
| ¹ Bisphenol A/epichlorohydrin derived epoxy resin available from Resolution Performance Products. ²4,4'-(1-methylethylidene)bisphenol available from Bayer Corporation. ³ Reaction product prepared from Bisphenol A and ethylene oxide at a molar ratio of 1:6 (100% solids). ⁴85% by weight solution of Epon 828 in methylisobutyl ketone. | | |

The materials of component A were added to a flask fitted with a stirrer, thermocouple, nitrogen inlet and condenser and the temperature was increased to 130°C. Component B was added and an exotherm caused the temperature to increase to 155°C. The temperature was allowed to fall to 143°C over about 30 minutes and then component C was added. After holding at 143°C for 30 minutes, the materials of component D were added and the temperature was adjusted to 123°C. One hour later component E was added and the reaction mixture was cooled to 99°C over 90 minutes. Component F was added dropwise over 15 minutes, component G was added 15 minutes later and a temperature of 96-99°C was maintained for two hours. Component H was added and stirring was continued until the mixture was homogeneous.

1821.6 g of the reaction mixture were the poured into the materials of component I at 60°C under rapid agitation. Component J was added over about one hour, methylisobutyl ketone was removed by distillation under reduced pressure at 60°C and then deionized water was added to adjust the solids to about 20 %.

The resulting dispersant composition had a solids content of 19.3 weight percent. The polymeric components of the dispersion had a weight average molecular weight of 55,987 and a Z-average molecular weight of 311,833, wherein the molecular weights are obtained by gel permeation chromatography carried out in dimethylformamide (DMF) using polystyrene standards.

### Example 17: Preparation of Electrodepositable Aqueous Resinous Dispersion

An electrodepositable aqueous resinous dispersion was prepared using the materials and amounts set forth in Table 17. Amounts are listed in grams.

**TABLE 17**

| Component | Material | Amount |
|---|---|---|
| A | Dispersant of Example 16 | 671.82 |
| | deionized water | 105.20 |
| | Purac HS 50 | 11.21 |
| | | |
| B | Dispersant of Example 16 | 74.63 |
| | Styrene | 152.75 |
| | ethyl acrylate | 142.55 |
| | hexanediol diacrylate | 10.20 |
| | hydroxypropyl methacrylate | 33.95 |
| | | |
| C | deionized water | 195.52 |
| | aqueous hydrogen peroxide (35%) | 5.14 |
| | | |
| D | iso-ascorbic acid | 0.95 |
| | deionized water | 193.05 |
| | | |
| E | deionized water | 7.47 |
| | aqueous hydrogen peroxide (35%) | 0.15 |
| | | |
| F | iso-ascorbic acid | 0.15 |
| | deionized water | 7.47 |

The materials of component A were added to a flask fitted with a stirrer, thermocouple, nitrogen inlet and condenser. The temperature was adjusted to 50°C and nitrogen was bubbled through the mixture for 30 minutes. The materials of component B were mixed in a separate vessel, the materials of component C were added and the mixture was dispersed using a high shear homogenizer.

The dispersion was added to a dropping funnel and the materials of component D were added to another dropping funnel. The contents of the funnels were added to the flask at a uniform rate over three hours. A temperature of 50°C was maintained throughout this period and for 30 minutes after the addition was complete. The materials of components E and F were then added and a temperature of 50°C was maintained for a further 30 minutes.

The resulting electrodepositable aqueous resinous dispersion had a solids content of 27.4 weight percent. The polymeric components of the dispersion had a weight average molecular weight of 491,793 and a Z-average molecular weight of 807,885, wherein the molecular weights are obtained by gel permeation chromatography carried out in dimethylformamide (DMF) using polystyrene standards. The polymeric particles had an average particle size of 341Å. The dispersion had 0.089 milliequivalents of cationic salt groups per gram of polymer solids.

### Example 18: Preparation of Polymeric Dispersant

A composition comprising a polymeric dispersant was prepared using the materials and amounts set forth in Table 18. Amounts are listed in grams.

**TABLE 18**

| Component | Material | Amount |
|---|---|---|
| A | Dowanol PNB | 65.46 |
| | Dowanol PM | 84.15 |
| | Butyl Cellosolve | 200.00 |
| | deionized water | 14.00 |
| | polyester | 130.12 |
| | | |
| B | ethyl acrylate | 353.40 |
| | Hydroxypropyl methacrylate | 139.51 |
| | Methyl methacrylate | 260.40 |
| | styrene | 62.10 |
| | Glycidyl methacrylate | 93.00 |
| | allyl methacrylate | 18.60 |
| | t-dodecyl mercaptan | 9.30 |
| | Vazo 67 | 23.26 |
| | Dowanol PM | 14.88 |
| | Dowanol PNB | 29.76 |
| | methyl propyl ketone | 11.90 |
| | | |
| C | Lupersol 7M50 | 18.60 |
| | Dowanol PNB | 14.88 |
| | Dowanol PM | 7.43 |
| | | |
| D | butyl Cellosolve | 80.94 |
| | | |
| E | thiodiethanol | 151.40 |
| | Purac HS 88¹ | 44.40 |
| | ricinoleic acid | 18.60 |
| | deionized water | 33.48 |
| | | |
| F | deionized water | 2901.11 |
| | | |
| J | deionized water | 1195.90 |

| | | |
|---|---|---|
| ¹88% aqueous lactic acid available from Purac America Inc. | | |

The materials of component A were charged to a flask fitted with a nitrogen inlet, stirrer, condenser and thermocouple. The temperature was increased to 100°C. The materials of component B were then added at a uniform rate over 150 minutes. A temperature of 100 to 110°C was maintained throughout this period and for a further 30 minutes. The temperature was then increased to 120°C and the materials of component C were added over about 15 minutes. Component D was added and the resin solution was cooled to 90°C. The materials of component E were added and the temperature was adjusted to 85°C and maintained for six hours.

In a separate vessel, component F was heated to 40°C. The resin and crosslinker solution was then added under rapid agitation. One hour later, component G was added. The resin dispersion was allowed to cool to below 30°C before stirring was stopped.

The resulting dispersant composition had a solids content of 17.8 weight percent. The polymeric components of the dispersion had a weight average molecular weight of 152,159 and a Z-average molecular weight of 602,961, wherein the molecular weights are obtained by gel permeation chromatography carried out in dimethylformamide (DMF) using polystyrene standards.

### Example 19: Preparation of Electrodepositable Aqueous Resinous Dispersion

An electrodepositable aqueous resinous dispersion was prepared using the materials and amounts set forth in Table 19. Amounts are listed in grams.

**TABLE 19**

| Component | Material | Amount |
|---|---|---|
| A | Dispersant of Example 18 | 411.80 |
| | deionized water | 447.23 |
| | | |
| B | Dispersant of Example 18 | 45.74 |
| | ethyl acrylate | 87.57 |
| | styrene | 93.82 |
| | hydroxypropyl methacrylate | 20.85 |
| | SR-351H | 6.26 |
| | | |
| C | deionized water | 129.36 |
| | aqueous hydrogen peroxide (35%) | 3.16 |
| | | |
| D | iso-ascorbic acid | 0.58 |
| | deionized water | 135.79 |
| | | |
| E | deionized water | 4.59 |
| | aqueous hydrogen peroxide (35%) | 0.09 |
| | | |
| F | iso-ascorbic acid | 0.09 |
| | deionized water | 4.59 |

The materials of component A were added to a flask fitted with a stirrer, thermocouple, nitrogen inlet and condenser. The temperature was adjusted to 50°C and nitrogen was bubbled through the mixture for 30 minutes. The materials of component B were mixed in a separate vessel, the materials of component C were added and the mixture was dispersed using a high shear homogenizer. The dispersion was added to a dropping funnel and the materials of component D were added to another dropping funnel. The contents of the funnels were added to the flask at a uniform rate over three hours. A temperature of 50°C was maintained throughout this period and for 30 minutes after the addition was complete. The materials of components E and F were then added and a temperature of 50°C was maintained for a further 30 minutes.

The resulting electrodepositable aqueous resinous dispersion had a solids content of 19.8 weight percent. The polymeric components of the dispersion had a weight average molecular weight of 670,464 and a Z-average molecular weight of 905,788, wherein the molecular weights are obtained by gel permeation chromatography carried out in dimethylformamide (DMF) using polystyrene standards. The polymeric particles had an average particle size of 40Å. The dispersion had 0.014 milliequivalents of cationic salt groups per gram of polymer solids.

### Example 20: Preparation of Electrodepositable Aqueous Resinous Dispersion

An electrodepositable aqueous resinous dispersion was prepared using the materials and amounts set forth in Table 20. Amounts are listed in grams.

**TABLE 20**

| Components | Material | Amount |
|---|---|---|
| A | methyl isobutyl ketone | 147.11 |
| | Tinuvin 1130¹ | 14.91 |
| | | |
| B | ethyl acrylate | 340.02 |
| | styrene | 160.01 |
| | hydroxypropyl methacrylate | 64.01 |
| | methyl methacrylate | 116.00 |
| | glycidyl methacrylate | 120.02 |
| | t-dodecyl mercaptan | 3.99 |
| | Vazo 67² | 13.99 |
| | Dowanol PNB³ | 25.61 |
| | Dowanol PM⁴ | 12.80 |
| | methyl isobutyl ketone | 10.38 |
| | | |
| C | Vazo 67 | 0.93 |
| | Dowanol PNB | 1.71 |
| | Dowanol PM | 0.85 |
| | methyl isobutyl ketone | 0.69 |
| | | |
| D | Luperox 7M50 | 16.03 |
| | Dowanol PNB | 12.80 |
| | methyl isobutyl ketone | 6.40 |
| | | |
| E | diethanolamine | 72.01 |
| | | |
| F | DETA diketimine ⁶ | 60.33 |
| | | |
| G | crosslinker⁷ | 656.63 |
| | | |
| H | sulfamic acid | 50.65 |
| | deionized water | 4098.13 |

| | | |
|---|---|---|
| ¹Light stabilizer available from Ciba Geigy Corporation. ² 2,2'-azobis(2-methylbutyronotrile) available from Du Pont Specialty Chemicals. ³ N-butoxypropanol solvent available from Dow Chemical Co. ⁴ Propylene glycol monomethyl ether solvent available from Dow Chemical Co. ⁵ 50% t-butyl peroxyacetate in mineral spirits available from Arkema Inc. ⁶ Diketimine formed from diethylene triamine and methylisobutyl ketone (72.69% solids in methylisobutyl ketone). ⁷ Blocked isocyanate curing agent, 79.5% solids in methylisobutyl ketone. Prepared by reacting 10 equivalents of isophorone diisocyanate with 1 equivalent of trimethylol propane, 3 equivalents of bisphenol A-ethylene oxide polyol (prepared at a bisphenol A to ethylene oxide molar ratio of 1:6) and 6 equivalents of primary hydroxy from 1,2-butane diol. | | |

The materials of component A were raised to reflux in a 3 liter flask fitted with a stirrer, thermocouple, nitrogen inlet and a Dean and Stark condenser. The temperature was adjusted throughout the process to maintain reflux unless noted otherwise. The materials of component B were added at a uniform rate over 150 minutes, followed immediately by the materials of component C over 10 minutes. After a further 10 minutes, the materials of component D were added over 10 minutes. 90 minutes later component E was added followed 90 minutes later by component F. After 60 minutes, component G was added and the temperature was allowed to fall to 105°C over 60 minutes.

Meanwhile the materials of component H were heated to 50°C in a separate vessel. 1764 g of the reaction mixture were the poured into the materials of component H under rapid agitation. Solvent was removed from the resulting dispersion by distillation under reduced pressure.

The resulting electrodepositable aqueous resinous dispersion had a solids content of 31.8 weight percent. The polymeric components of the dispersion had a weight average molecular weight of 68,614 and a Z-average molecular weight of 438,571, wherein the molecular weights are obtained by gel permeation chromatography carried out in dimethylformamide (DMF) using polystyrene standards.

### Example 21: Preparation of Electrodepositable Coating Composition

An electrodepositable coating composition in the form of an electrodeposition bath was prepared as described below and from a mixture of the ingredients listed in Table 21.

**TABLE 21**

| Component | Material | Amount (parts by weight) |
|---|---|---|
| 1 | Dispersion of Example 20 | 741.3 |
| 2 | Dispersion of Example 10 | 82.9 |
| 3 | Cationic epoxy resin¹ | 468.5 |
| 4 | Plasticizer | 10.0 |
| 5 | Flexibilizer³ | 62.3 |
| 6 | DBTDO paste⁴ | 4.2 |
| 7 | Pigment Paste⁵ | 150.0 |
| 8 | Deionized Water | 880.9 |

| | | |
|---|---|---|
| ¹ Prepared as described in Example H of United States Patent Application Publication 2003/0054193. ² The reaction product of 2 moles of diethylene glycolbutyl ether and 1 mole of formaldehyde, prepared as described in United States Patent No. 4,891,111. ³ The reaction product of Jeffamine D400 (polyoxypropylenediamine available from Huntsman Corporation) and DER-732 (aliphatic epoxide commercially available from Dow Chemical Co), prepared as described in United States Patent No. 4,423,166. ⁴ Prepared as described in Example 1 of United States Patent Application Publication 2003/0054193. ⁵A pigment paste commercially available as E6251 from PPG Industries, Inc. | | |

Under agitation, component 1 was mixed with component 2. Components 3 and 4 were added directly to the diluted cationic resin. Component 5 was diluted with 100g of deionized water and then added to the resin mixture under agitation. Components 6 and 7 were then added to the resin blend. Component 8 was then added to the resin mixture under agitation. Final bath solids were about 22%, with a pigment to resin ratio of 0.15:1.0. Twenty five percent of the total bath was removed by ultrafiltration and replaced with deionized water after the bath stirred for two hours. The paint was allowed to stir for an additional sixteen hours before any electrocoating occurred.

### Example 22: Preparation of Electrodepositable Coating Composition

An electrodepositable coating composition in the form of an electrodeposition bath was prepared from a mixture of the ingredients listed in Table 22 using the same procedure as described for Example 21.

**TABLE 22**

| Component | Ingredients | Parts By Weight |
|---|---|---|
| 1 | Dispersion of Example 20 | 741.3 |
| 2 | Dispersion of Example 11 | 82.2 |
| 3 | Cationic epoxy resin¹ | 468.5 |
| 4 | Plasticizer² | 10.0 |
| 5 | Flexibilizer³ | 62.3 |
| 6 | DBTDO paste⁴ | 4.2 |
| 7 | Pigment Paste⁵ | 150.0 |
| 8 | Deionized Water | 881.5 |

| | | |
|---|---|---|
| ¹ Prepared as described in Example H of United States Patent Application Publication 2003/0054193. ² The reaction product of 2 moles of diethylene glycolbutyl ether and 1 mole of formaldehyde, prepared as described in United States Patent No. 4,891,111. ³ The reaction product of Jeffamine D400 (polyoxypropylenediamine available from Huntsman Corporation) and DER-732 (aliphatic epoxide commercially available from Dow Chemical Co), prepared as described in United States Patent No. 4,423,166. ⁴ Prepared as described in Example 1 of United States Patent Application Publication 2003/0054193. ⁵A pigment paste commercially available as E6251 from PPG Industries, Inc. | | |

### Example 23: Preparation of Electrodepositable Coating Composition

An electrodepositable coating composition in the form of an electrodeposition bath was prepared from a mixture of the ingredients listed in Table 23 using the same procedure as described for Example 21.

**TABLE 23**

| Component | Ingredients | Parts By Weight |
|---|---|---|
| 1 | Dispersion of Example 20 | 1146.7 |
| 2 | Dispersion of Example 12 | 67.6 |
| 3 | Cationic epoxy resin | 784.5 |
| 4 | Plasticizer² | 15.9 |
| 5 | Flexibilizer³ | 98.6 |
| 6 | DBTDO paste⁴ | 6.6 |
| 7 | Pigment Paste⁵ | 237.5 |
| 8 | Deionized Water | 1442.6 |

| | | |
|---|---|---|
| ¹ Prepared as described in Example H of United States Patent Application Publication 2003/0054193. ² The reaction product of 2 moles of diethylene glycolbutyl ether and 1 mole of formaldehyde, prepared as described in United States Patent No. 4,891,111. ³ The reaction product of Jeffamine D400 (polyoxypropylenediamine available from Huntsman Corporation) and DER-732 (aliphatic epoxide commercially available from Dow Chemical Co), prepared as described in United States Patent No. 4,423,166. ⁴ Prepared as described in Example 1 of United States Patent Application Publication 2003/0054193. ⁵A pigment paste commercially available as E6251 from PPG Industries, Inc. | | |

### Example 24: Preparation of Electrodepositable Coating Composition

An electrodepositable coating composition in the form of an electrodeposition bath was prepared from a mixture of the ingredients listed in Table 24 using the same procedure as described for Example 21.

**TABLE 24**

| Component | Ingredients | Parts By Weight |
|---|---|---|
| 1 | Dispersion of Example 20 | 1146.7 |
| 2 | Dispersion of Example 13 | 68.1 |
| 3 | Cationic epoxy resin¹ | 784.5 |
| 4 | Plasticizer² | 15.9 |
| 5 | Flexibilizer³ | 98.6 |
| 6 | DBTDO paste⁴ | 6.6 |
| 7 | Pigment Paste⁵ | 237.5 |
| 8 | Deionized Water | 1442.2 |

| | | |
|---|---|---|
| ¹Prepared as described in Example H of United States Patent Application Publication 2003/0054193. ² The reaction product of 2 moles of diethylene glycolbutyl ether and 1 mole of formaldehyde, prepared as described in United States Patent No. 4,891,111. ³ The reaction product of Jeffamine D400 (polyoxypropylenediamine available from Huntsman Corporation) and DER-732 (aliphatic epoxide commercially available from Dow Chemical Co), prepared as described in United States Patent No. 4,423,166. ⁴ Prepared as described in Example 1 of United States Patent Application Publication 2003/0054193. ⁵A pigment paste commercially available as E6251 from PPG Industries, Inc. | | |

### Example 25: Preparation of Electrodepositable Coating Composition

An electrodepositable coating composition in the form of an electrodeposition bath was prepared from a mixture of the ingredients listed in Table 25 using the same procedure as described for Example 21.

**TABLE 25**

| Component | Ingredients | Parts By Weight |
|---|---|---|
| 1 | Dispersion of Example 20 | 1171.8 |
| 2 | Dispersion of Example 15 | 46.2 |
| 3 | Cationic epoxy resin¹ | 784.5 |
| 4 | Plasticizer² | 15.9 |
| 5 | Flexibilizer³ | 98.6 |
| 6 | DBTDO paste⁴ | 6.6 |
| 7 | Pigment Paste⁵ | 237.5 |
| 8 | Deionized Water | 1439.0 |

| | | |
|---|---|---|
| ¹ Prepared as described in Example H of United States Patent Application Publication 2003/0054193. ² The reaction product of 2 moles of diethylene glycolbutyl ether and 1 mole of formaldehyde, prepared as described in United States Patent No. 4,891,1111. ³ The reaction product of Jeffamine D400 (polyoxypropylenediamine available from Huntsman Corporation) and DER-732 (aliphatic epoxide commercially available from Dow Chemical Co), prepared as described in United States Patent No. 4,423,166. ⁴ Prepared as described in Example 1 of United States Patent Application Publication 2003/0054193. ⁵A pigment paste commercially available as E6251 from PPG Industries, Inc. | | |

### Example 26: Preparation of Electrodepositable Coating Composition

An electrodepositable coating composition in the form of an electrodeposition bath was prepared from a mixture of the ingredients listed in Table 26 using the same procedure as described for Example 21.

**TABLE 26**

| Component | Ingredients | Parts By Weight |
|---|---|---|
| 1 | Dispersion of Example 20 | 1171.8 |
| 2 | Dispersion of Example 14 | 47.6 |
| 3 | Cationic epoxy resin¹ | 784.5 |
| 4 | Plasticizer² | 15.9 |
| 5 | Flexibilizer³ | 98.6 |
| 6 | DBTDO paste⁴ | 6.6 |
| 7 | Pigment Paste⁵ | 237.5 |
| 8 | Deionized Water | 1437.6 |

| | | |
|---|---|---|
| ¹Prepared as described in Example H of United States Patent Application Publication 2003/0054193. ² The reaction product of 2 moles of diethylene glycolbutyl ether and 1 mole of formaldehyde, prepared as described in United States Patent No. 4,891,111. ³ The reaction product of Jeffamine D400 (polyoxypropylenediamine available from Huntsman Corporation) and DER-732 (aliphatic epoxide commercially available from Dow Chemical Co), prepared as described in United States Patent No. 4,423,166. ⁴ Prepared as described in Example 1 of United States Patent Application Publication 2003/0054193. ⁵A pigment paste commercially available as E6251 from PPG Industries, Inc. | | |

### Example 27: Preparation of Electrodepositable Coating Composition

An electrodepositable coating composition in the form of an electrodeposition bath was prepared from a mixture of the ingredients listed in Table 27.

**TABLE 27**

| Component | Ingredients | Parts By Weight |
|---|---|---|
| 1 | Dispersion of Example 20 | 1240.0 |
| 2 | Cationic epoxy resin¹ | 784.5 |
| 3 | Plasticizer² | 15.9 |
| 4 | Flexibilizer³ | 98.6 |
| 5 | DBTDO paste⁴ | 6.6 |
| 6 | Pigment Paste⁵ | 237.5 |
| 7 | Deionized Water | 1417.0 |

| | | |
|---|---|---|
| ¹ Prepared as described in Example H of United States Patent Application Publication 2003/0054193. ² The reaction product of 2 moles of diethylene glycolbutyl ether and 1 mole of formaldehyde, prepared as described in United States Patent No. 4,891,111. ³ The reaction product of Jeffamine D400 (polyoxypropylenediamine available from Huntsman Corporation) and DER-732 (aliphatic epoxide commercially available from Dow Chemical Co), prepared as described in United States Patent No. 4,423,166. ⁴ Prepared as described in Example 1 of United States Patent Application Publication 2003/0054193. ⁵A pigment paste commercially available as E6251 from PPG Industries, Inc. | | |

Under agitation, component 1 was mixed with components 2 and 3. Component 4 was diluted with 100g of deionized water and then added to the resin mixture under agitation. Components 5 and 6 were then added to the resin blend. Component 7 was then added to the resin mixture under agitation. Final bath solids were about 22%, with a pigment to resin ratio of 0.15:1.0. Twenty five percent of the total bath was removed by ultrafiltration and replaced with deionized water after the bath stirred for two hours. The paint was allowed to stir for an additional sixteen hours before any electrocoating occurred.

### TEST SUBSTRATES

Each of the electrodeposition bath compositions of Examples 21 through 27 above were electrodeposited onto one or both of two different substrates as indicated in Table 28. One is a cold rolled steel substrate which had been pretreated with zinc phosphate pretreatment followed by a deionized water rinse; the second is a electro galvanized substrate which had been pretreated with zinc phosphate pretreatment followed by a deionized water rinse (commercially available as CRS C700DI and E60 EZG C700DI from ACT Laboratories, respectively). Conditions for cationic electrodeposition of each were as follows: 2 minutes at 90°F at 225 - 250volts to yield a cured film thickness of 1.0 to 1.1mils. After a deionized water rinse, the electrocoated panels were cured in an electric oven at 360°F for 30 minutes.

The cured electrocoat films were evaluated for film smoothness and oil spot resistance. Film thickness was measured using a Fisher Permascope. Film smoothness was measured using a Gould Surfanalyzer 150. Recorded film thickness and smoothness were each based on an average of three measurements. Results for film smoothness are reported in the following Table 28.

Oil spot contamination resistance testing evaluates the ability of an electrodeposited coating, upon cure, to resist crater formation due to contaminants carried into the bath with the substrate. Panels were tested for oil spot resistance by spotting the top half of a CRS C700DI test panel with TRIBOL-ICO medium oil and the bottom half of the panel with LUBECON ATS oil. These oils are representative of those typically used for chain lubrication in automotive assembly plants. The oil spotted test panels were then electrocoated and cured as described above to give a cured film thickness of 1.0-1.1mils. Ratings for oil spot contamination resistance are reported in the following Table 28.

**TABLE 28**

| Example | CRSC700DI Smoothness (micro inches) | E60EZGC700DI Smoothness (micro inches) | Oil Resistance Rating * |
|---|---|---|---|
| 21 | | 9.95 | 7 |
| 22 | | 16.85 | 8 |
| 23 | 8.53 | | 6 |
| 24 | 8.03 | | 7 |
| 25 | 8.89 | | 6 |
| 26 | 8.80 | | 7 |
| 27 | 9.61 | 12.98 | 3 |

| | | | |
|---|---|---|---|
| *10 = best; 0 = worst | | | |

## Claims

1. An electrodepositable aqueous resinous dispersion comprising
(a) a polymeric dispersant comprising an at least partially neutralized high molecular weight cationic acrylic polymer having a Z-average molecular weight of 200,000 to 2,000,000, and
(b) a cationic acrylic polymer that is different from the polymeric dispersant.

2. An electrodepositable coating composition comprising the dispersion of claim 1.

3. The dispersion of claim 1, wherein the dispersion is a stable dispersion.

4. The dispersion of claim 3, wherein the dispersion is substantially free of surfactant.

5. The dispersion of claim 1, wherein the polymeric dispersant comprises a cationic polymer comprising active hydrogen functional groups.

6. The dispersion of claim 1, wherein the polymeric dispersant has a Z-average molecular weight of 450,000 to 2,000,000.

7. The dispersion of claim 1, wherein the acrylic polymer that is different from the polymeric dispersant is obtained by (a) dispersing an ethylenically unsaturated polymerizable monomer composition and a free radical initiator in an aqueous medium in the presence of the polymeric dispersant, and (b) subjecting the dispersion to emulsion polymerization conditions.

8. The dispersion of claim 1, wherein the acrylic polymer that is different from the polymeric dispersant comprises an active hydrogen-containing acrylic polymer.

9. The dispersion of claim 1, wherein the dispersion comprises 2 to 50 percent by weight of the polymeric dispersant and 50 to 98 percent by weight of the polymerizable ethylenically unsaturated monomer composition that is used to make the acrylic polymer that is different from the polymeric dispersant.

10. The composition of claim 2 further comprising an additional cationic salt group containing film forming polymer that is different from the polymeric dispersant and the cationic acrylic polymer that is different from the polymeric dispersant.

11. The composition of claim 10, wherein the additional cationic salt group containing film forming polymer is selected from (a) a polymer comprising cationic amino salt groups that are derived from pendant and/or terminal amino groups, (b) active hydrogen-containing, cationic salt group-containing polymers derived from a polyglycidyl ether of a polyhydric phenol that is essentially free of aliphatic carbon atoms to which are bonded more than one aromatic group, and (c) a mixture thereof.

12. The dispersion of claim 1, wherein the dispersion comprises polymeric particles having an average particle size diameter of no more than 0.1 microns.

13. The dispersion of claim 12, wherein the average particle size diameter is no more than 0.06 microns.

14. The dispersion of claim 1, wherein the dispersion comprises from 5 to 40 percent by weight resin solids, based on the total weight of the dispersion.

15. The composition of claim 2 further comprising a curing agent.

16. The composition of claim 15, wherein the curing agent comprises an at least partially blocked polyisocyanate.

17. An electroconductive substrate at least partially coated with the composition of claim 2.

18. A method for coating an electroconductive substrate comprising:
(a) electrophoretically depositing on the substrate the electrodepositable coating composition of claim 2 to form an electrodeposited coating over at least a portion of the substrate, and
(b) heating the coated substrate to a temperature and for a time sufficient to cure the electrodeposited coating on the substrate.

19. A method for making an electrodepositable aqueous resinous dispersion comprising:
(a) dispersing an ethylenically unsaturated polymerizable monomer composition and a free radical initiator in an aqueous medium in the presence of an at least partially neutralized high molecular weight cationic acrylic polymer dispersant polymer having a Z-average molecular weight of 200,000 to 2,000,000, and
(b) subjecting the dispersion to emulsion polymerization conditions.

## Patentansprüche

1. Elektrisch abscheidbare wäßrige Harzdispersion, enthaltend:
(a) ein polymeres Dispergiermittel, enthaltend ein wenigstens teilweise neutralisiertes hochmolekulares kationisches Acrylpolymer mit einem Z-mittleren Molekulargewicht von 200.000 bis 2.000.000 und
(b) ein kationisches Acrylpolymer, das sich von dem polymeren Dispergiermittel unterscheidet.

2. Elektrisch abscheidbare Beschichtungszusammensetzung, die die Dispersion nach Anspruch 1 enthält.

3. Dispersion nach Anspruch 1, wobei die Dispersion eine stabile Dispersion ist.

4. Dispersion nach Anspruch 3, wobei die Dispersion im Wesentlichen frei von oberflächenaktiven Mitteln ist.

5. Dispersion nach Anspruch 1, wobei das polymere Dispergiermittel ein kationisches Polymer enthält, das funktionelle Gruppen mit aktivem Wasserstoff aufweist.

6. Dispersion nach Anspruch 1, wobei das polymere Dispergiermittel ein Z-mittleres Molekulargewicht von 450.000 bis 2.000.000 aufweist.

7. Dispersion nach Anspruch 1, wobei das Acrylpolymer, das sich von dem polymeren Dispergiermittel unterscheidet, durch (a) Dispergieren einer ethylenisch ungesättigten polymerisierbaren Monomerzusammensetzung und eines Radikalinitiators in einem wäßrigen Medium in Gegenwart des polymeren Dispergiermittels und (b) Aussetzen der Dispersion an Emulsionspolymerisationsbedingungen erhalten wird.

8. Dispersion nach Anspruch 1, wobei das Acrylpolymer, das sich von dem polymeren Dispergiermittel unterscheidet, ein Acrylpolymer, das aktiven Wasserstoff enthält, umfaßt.

9. Dispersion nach Anspruch 1, wobei die Dispersion 2 bis 50 Gew.-% des polymeren Dispergiermittels und 50 bis 98 Gew.-% der polymerisierbaren ethylenisch ungesättigten Monomerzusammensetzung enthält, die verwendet wird, um das Acrylpolymer herzustellen, das sich von dem polymeren Dispergiermittel unterscheidet.

10. Zusammensetzung nach Anspruch 2, die zusätzlich ein weiteres filmbildendes Polymer, das kationische Salzgruppen aufweist, enthält, das sich von dem polymeren Dispergiermittel und dem kationischen Acrylpolymer, das unterschiedlich ist zu dem polymeren Dispergiermittel, unterscheidet.

11. Zusammensetzung nach Anspruch 10, wobei das zusätzliche filmbildende Polymer, das kationische Salzgruppen aufweist, ausgewählt ist aus (a) einem Polymer, das kationische Aminsalzgruppen enthält, die sich von seitenständigen und/oder endständigen Aminogruppen ableiten, (b) kationische Salzgruppen enthaltenden Polymeren, die aktiven Wasserstoff enthalten und sich von einem Polyglycidylether eines Polyhydroxyphenols, das im Wesentlichen frei von aliphatischen Kohlenstoffatomen ist, die an mehr als eine aromatische Gruppe gebunden sind, ableiten, und (c) einer Mischung davon.

12. Dispersion nach Anspruch 1, wobei die Dispersion polymere Teilchen mit einem mittleren Teilchendurchmesser von nicht mehr als 0,1 µm enthält.

13. Dispersion nach Anspruch 12, wobei der mittlere Teilchendurchmesser nicht mehr als 0,06 µm beträgt.

14. Dispersion nach Anspruch 1, wobei die Dispersion 5 bis 40 Gew.-% Harzfeststoffe, bezogen auf das Gesamtgewicht der Dispersion, enthält.

15. Zusammensetzung nach Anspruch 2, die zusätzlich ein Härtungsmittel enthält.

16. Zusammensetzung nach Anspruch 15, wobei das Härtungsmittel ein zumindest teilweise blockiertes Polyisocyanat umfaßt.

17. Elektrisch leitfähiges Substrat, das zumindest teilweise mit der Zusammensetzung nach Anspruch 2 beschichtet ist.

18. Verfahren zur Beschichtung eines elektrisch leitfähigen Substrats, umfassend:
(a) elektrophoretisches Abscheiden der elektrisch abscheidbaren Beschichtungszusammensetzung nach Anspruch 2 auf dem Substrat, um eine elektrisch abgeschiedene Beschichtung auf wenigstens einem Teil des Substrats auszubilden, und
(b) Erwärmen des beschichteten Substrats auf eine Temperatur und für eine Zeitdauer, die ausreicht, um die elektrisch abgeschiedene Beschichtung auf dem Substrat zu härten.

19. Verfahren zur Herstellung einer elektrisch abscheidbaren wäßrigen Harzdispersion, umfassend:
(a) Dispergieren einer ethylenisch ungesättigten polymerisierbaren Monomerzusammensetzung und eines Radikalinitiators in einem wäßrigen Medium in Gegenwart eines wenigstens teilweise neutralisierten hochmolekularen kationischen Acrylpolymerdispergiermittels mit einem Z-mittleren Molekulargewicht von 200.000 bis 2.000.000 und
(b) Aussetzen der Dispersion an Emulsionspolymerisationsbedingungen.

## Revendications

1. Dispersion résineuse aqueuse électrodéposable, comprenant :
(a) un dispersant polymère comprenant un polymère acrylique cationique de poids moléculaire élevé au moins partiellement neutralisé possédant un poids moléculaire moyen Z de 200 000 à 2 000 000, et
(b) un polymère acrylique cationique qui est différent du dispersant polymère.

2. Composition de revêtement électrodéposable comprenant la dispersion selon la revendication 1.

3. Dispersion selon la revendication 1, dans laquelle la dispersion est une dispersion stable.

4. Dispersion selon la revendication 3, dans laquelle la dispersion est essentiellement exempte de tensioactif.

5. Dispersion selon la revendication 1, dans laquelle le dispersant polymère comprend un polymère cationique comprenant des groupes fonctionnels à hydrogène actif.

6. Dispersion selon la revendication 1, dans laquelle le dispersant polymère possède un poids moléculaire moyen Z de 450 000 à 2 000 000.

7. Dispersion selon la revendication 1, dans laquelle le polymère acrylique qui est différent du dispersant polymère est obtenu (a) en dispersant une composition de monomère polymérisable éthyléniquement insaturé et un initiateur de radicaux libres dans un milieu aqueux en présence du dispersant polymère, et (b) en soumettant la dispersion à des conditions de polymérisation en émulsion.

8. Dispersion selon la revendication 1, dans laquelle le polymère acrylique qui est différent du dispersant polymère comprend un polymère acrylique contenant des hydrogènes actifs.

9. Dispersion selon la revendication 1, dans laquelle la dispersion comprend 2 à 50 pour cent en poids du dispersant polymère et 50 à 98 pour cent en poids de la composition de monomère polymérisable éthyléniquement insaturé qui est utilisée pour préparer le polymère acrylique qui est différent du dispersant polymère.

10. Composition selon la revendication 2, comprenant en outre un polymère filmogène contenant des groupes de sels cationiques supplémentaire qui est différent du dispersant polymère et du polymère acrylique cationique qui est différent du dispersant polymère.

11. Composition selon la revendication 10, dans laquelle le polymère filmogène contenant des groupes de sels cationiques supplémentaire est choisi parmi (a) un polymère comprenant des groupes de sels d'amines cationiques dérivant de groupes amino pendants et/ou terminaux, (b) des polymères contenant des hydrogènes actifs et des groupes de sels cationiques dérivant d'un polyglycidyl éther d'un phénol polyhydrique qui est essentiellement exempt d'atomes de carbone aliphatique auxquels sont liés plusieurs groupes aromatiques, et (c) leurs mélanges.

12. Dispersion selon la revendication 1, dans laquelle la dispersion comprend des particules polymères possédant un diamètre moyen de particule d'au plus 0,1 micron.

13. Dispersion selon la revendication 12, dans laquelle le diamètre moyen de particule est d'au plus 0,06 micron.

14. Dispersion selon la revendication 1, dans laquelle la dispersion comprend 5 à 40 pour cent en poids de matières solides résineuses, sur la base du poids total de la dispersion.

15. Composition selon la revendication 2, comprenant en outre un agent de durcissement.

16. Composition selon la revendication 15, dans laquelle l'agent de durcissement comprend un polyisocyanate au moins partiellement bloqué.

17. Substrat électroconducteur au moins partiellement recouvert par la composition selon la revendication 2.

18. Procédé de revêtement d'un substrat électroconducteur, comprenant :
(a) le dépôt par électrophorèse sur le substrat de la composition de revêtement électrodéposable selon la revendication 2, pour former un revêtement électrodéposé sur au moins une partie du substrat, et
(b) le chauffage du substrat revêtu à une température et pendant une durée suffisantes pour durcir le revêtement électrodéposé sur le substrat.

19. Procédé de préparation d'une dispersion résineuse aqueuse électrodéposable, comprenant :
(a) la dispersion d'une composition de monomère polymérisable éthyléniquement insaturé et d'un initiateur de radicaux libres dans un milieu aqueux en présence d'un polymère dispersant à base d'un polymère acrylique cationique de poids moléculaire élevé au moins partiellement neutralisé possédant un poids moléculaire moyen Z de 200 000 à 2 000 000, et
(b) le fait de soumettre la dispersion à des conditions de polymérisation en émulsion.
